(19) Europäisches Patentamt
European Patent Office
Office européen des brevets

(11) EP 1 832 900 A1

(12) **EUROPEAN PATENT APPLICATION**
published in accordance with Art. 158(3) EPC

(43) Date of publication:
**12.09.2007 Bulletin 2007/37**

(21) Application number: **05809559.7**

(22) Date of filing: **22.11.2005**

(51) Int Cl.:
***G02B 5/30*** *(2006.01)* ***G03H 1/02*** *(2006.01)*
***G11B 7/24*** *(2006.01)*

(86) International application number:
**PCT/JP2005/021482**

(87) International publication number:
**WO 2006/059515 (08.06.2006 Gazette 2006/23)**

(84) Designated Contracting States:
**DE FR GB**

(30) Priority: **03.12.2004 JP 2004352079**

(71) Applicant: **FUJIFILM Corporation**
**Minato-ku**
**Tokyo 106-8620 (JP)**

(72) Inventors:
- **KAMADA, Kou,**
  **c/o FujiFilm Corporation**
  **Fujinomiya-shi,**
  **Shizuoka 418-8666 (JP)**
- **YANAGIHARA, Naoto,**
  **c/o FujiFilm Corporation**
  **Fujinomiya-shi,**
  **Shizuoka 418-8666 (JP)**

(74) Representative: **HOFFMANN EITLE**
**Patent- und Rechtsanwälte**
**Arabellastraße 4**
**D-81925 München (DE)**

(54) **FILTER FOR OPTICAL RECORDING MEDIUM, OPTICAL RECORDING MEDIUM, METHOD FOR MANUFACTURING SUCH OPTICAL RECORDING MEDIUM, OPTICAL RECORDING METHOD AND OPTICAL REPRODUCING METHOD**

(57) The present invention provides a filter for optical recording media capable of preventing diffused reflection from a reflective layer caused by an information beam and a reference beam in the optical recording medium and preventing occurrences of noise without causing deviation in selective reflection wavelength even when an incidence angle is changed, a holographic optical recording medium that has not yet been conventionally provided, using the filter for optical recording media, a method for producing the optical recording medium efficiently at low-cost, and an optical recording and reproducing method using the optical recording medium using the optical recording medium. To this end, the present invention provides a filter for optical recording media containing two or more cholesteric liquid crystal layers laminated to one another, and a holographic optical recording medium using the filter for optical recording media.

FIG. 6

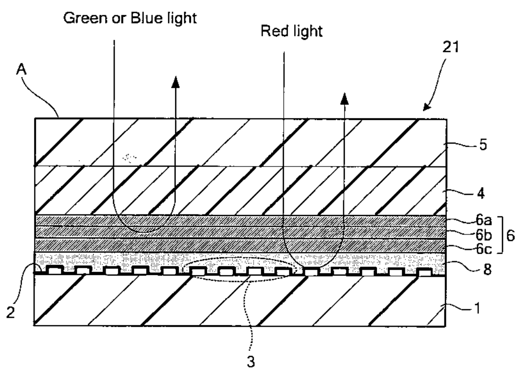


EP 1 832 900 A1

## Description

### Technical Field

The present invention relates to a filter for an optical recording medium suitably used as a wavelength selective reflection film in a holographic optical recording medium capable of recording a high density image which has not yet been conventionally achieved, an optical recording medium using the filer for the optical recording medium, a method for producing the optical recording medium, as well as an optical recording method and an optical reproducing method using the optical recording medium.

### Background Art

An optical recording medium is exemplified as one of recording media in which information in large volume such as high density images can be written. As this type of optical recording medium, for example, rewritable optical recording media such as optical magnetic discs and phase change optical discs, and write-once type optical recording media such as CD-R have been put in practical use, however, requests for further enlarging the capacity of the optical recording media are going on increasing. However, all of the conventionally proposed optical recording media are based on two dimensional recording, and increasing of recording capacity has been limited. Thus, in recent years, holographic optical recording media capable of recording information in a three dimensional manner attract a lot of attention.

In the holographic optical recording medium, information is recorded generally by overlapping an information beam to which a two dimensional intensity distribution has been given with a reference beam having an almost the same intensity as the information beam inside a photosensitive recording layer and producing a distribution of optical properties inside the recording layer by utilizing an interference pattern formed by the beams. Meanwhile, when the written information is read out (reproduced), only the reference beam is irradiated to the recording layer in the same arrangement as when recorded, and a reproduction beam having an intensity distribution commensurate with the optical property distribution inside the recording layer is emitted from the recording layer.

In this holographic optical recording medium, the optical property distribution is formed three-dimensionally in the recording layer. Thus, it is possible to partially overlap a region in which information has been written by one information beam with a region in which information has been written by another information beam, i.e., multiple recording is possible. When using digital volume holography, a signal to noise ratio (S/N ratio) at one spot is extremely high. Thus, even when the S/N ratio is slightly reduced by overwriting, the original information can be faithfully reproduced. As a result, the multiple recording can be performed several hundred times, and recording capacity of optical recording media can be remarkably increased (see Patent Literature 1).

As such a holographic optical recording medium, for example, as shown in FIG.1, an optical recording medium providing an under substrate 1 surface with a servo pit pattern 3 and having a reflective film 2 composed of aluminium on the surface of this servo pit pattern, a recording layer 4 on this reflective film and an upper substrate 5 on this recording layer have been proposed (see Patent Literature 2).

However, in an optical recording medium 20 having a layer configuration shown in FIG. 1, a servo zone and a recording zone are separated in a plane, and by just that much, there is a problem that the recording density is inconveniently reduced by half.

Thus, in Patent Literature 3, a circularly polarized light is used as an information beam and a reference beam, a cholesteric liquid crystal layer or a dichroic mirror as a filter layer is provided between the recording layer and the reflective film, and the recording layer and the servo layer are overlapped in the thickness direction. The recording density is doubled by the technique. When a cholesteric liquid crystal layer of a single layer having the same turning direction as the circularly polarized light of the information beam as the above-noted filter layer in a helical structure is used, it is possible to mass-produce an optical recording medium that is excellent in productivity and inexpensive on a large scale, and filtering effect at a perpendicular incidence angle of 0° is enhanced. However, in this proposal, when an incidence angle is changed, deviation in selective reflection wavelength is caused. When the incident light is inclined 10° or more, the information beam and the reference beam pass through the filter layer to reach the reflective film, and are reflected to thereby cause noise. This means that the proposal can not be used for an incident light with ± 10° or more focused by a lens in a typically used optical system for an optical medium .

Meanwhile, when a film which is suitably used for the typically used lens optical system is formed using the dichroic mirror, multilayered deposition composed of 50 or more layers is required and the optical recording medium requires extremely high cost.

Therefore, there has not been realized efficiently mass-producing, at low cost, a holographic optical recording medium capable of preventing diffused reflection from a reflective layer caused by an information beam and a reference beam in the optical recording medium and preventing occurrences of noise without causing deviation in selective reflection wavelength even when an incidence angle is changed, and it is an actual circumstance that it has been desired to rapidly

provide it.

Patent Literature 1: Japanese Patent Application Laid-Open (JP-A) No. 2002-123949

Patent Literature 2: Japanese Patent Application Laid-Open (JP-A) No. 11-311936

Patent Literature 3: Japanese Patent Application Laid-Open (JP-A) No. 2004-265472

Disclosure of Invention

It is an object of the present invention to provide a filter for optical recording media capable of preventing diffused reflection from a reflective layer caused by an information beam and a reference beam in an optical recording medium and preventing occurrences of noise without causing deviation in selective reflection wavelength even when an incidence angle is changed, a holographic optical recording medium capable of performing high density recording which has not been conventionally achieved, using the filter for the optical recording media; a method for producing the optical recording medium efficiently at low cost, as well as an optical recording method and an optical reproducing method using the optical recording medium.

In the filter for optical recording media of the present invention, two or more cholesteric liquid crystal layers are laminated. According to the filter for optical recording media of the present invention, by laminating two or more cholesteric liquid crystal layers therein, it is possible to eliminate angle dependency of reflection of irradiation light without causing deviation of selective reflection wavelength even when an incidence angle is changed.

In the filter for optical recording media of the present invention, the following aspects are preferable. Namely, an aspect in which each of the cholesteric liquid crystal layers has circularly polarized light separating property, an aspect in which a rotation direction of a helix in each of the cholesteric liquid crystal layers is the same to each other, an aspect in which each of the cholesteric liquid crystal layers has a different selective reflection central wavelength from each other, and an aspect in which each of the cholesteric liquid crystal layers has a different selective reflection wavelength zone and the selective reflection wavelength zone is continuous.

In the filter for optical recording media of the present invention, each of the cholesteric liquid crystal layers has circularity polarized light separating property, the rotation direction of the helix is the same to each other, the selective reflection central wavelength is different from each other, and the selective reflection wavelength zone is continuous. With the configuration, angle dependency of reflection of irradiation light can be eliminated without causing deviation of selective reflection wavelength even when an incidence angle is changed, and the filter for optical recording media can be suitably used as a wavelength selective reflection film.

In the filter for optical recording media of the present invention, the following aspects are preferable. Namely, an aspect in which a light having a first wavelength is transmitted and a light having a second wavelength which is different from the light having the first wavelength is reflected; an aspect in which the light of the first wavelength has a wavelength of 350 nm to 600 nm and the light of the second wavelength has a wavelength of 600 nm to 900 nm; an aspect in which a light reflectance at $\lambda_0$ to $\lambda_0$/cos20° is 40% or more, where $\lambda_0$ represents an irradiation light wavelength; an aspect of the filler for optical recording media having a light reflectance at $\lambda_0$ to $\lambda_0$/cos40° ($\lambda_0$ represents an irradiation light wavelength) is 40% or more; an aspect of the filler for optical recording media used as a selective reflection film in an optical recording medium which records information by utilizing holography; an aspect in which the optical recording medium records information by irradiating the optical recording medium with an information beam and a reference beam as a coaxial light flux based on an interference pattern formed by interference between the information beam and the reference beam.

The optical recording medium of the present invention has an upper substrate, an under substrate, a recording layer in which information is recorded on the under substrate using the holography, and a filer layer between the under substrate and the recording layer, wherein the filter layer is a laminate in which two or more layers of cholesteric liquid crystal layers are laminated to one another.

According to the optical recording medium, by the above layer configuration, an information beam and a reference beam and further a reproduction beam used upon recording or reproducing do not reach a reflective film without causing deviation of selective reflection wavelength even when an incidence angle is changed. Thus, it is possible to prevent occurrences of diffused light caused by diffused reflection on a reflected surface. Therefore, a reproduced image can be detected at least to such an extent that errors can be corrected without causing a problem that noise caused by diffused light is not overlapped on a reproduced image then to be detected by a CMOS sensor or on CCD. The greater amount of a noise component by diffused light requires greater multiplicity of the hologram. That is, the greater the multiplicity is, the smaller the diffraction efficiency is, e.g., when the multiplicity is 10 or more, a diffraction efficiency from one hologram is extremely small. When diffused noise is caused, it is extremely difficult to detect a reproduced image. The present invention makes it possible to eliminate difficulties and can realize the high density image recording which has not been achieved conventionally.

In the optical recording medium of the present invention, the following aspects are preferable. Namely, an aspect in which each of the cholesteric liquid crystal layers has circularly polarized light separating property, an aspect

in which the rotating direction of the helix in each of the cholesteric liquid crystal layers is the same to each other, an aspect in which each of the cholesteric liquid crystal layers has a different selective reflection central wavelength from each other, and an aspect in which each of the cholesteric liquid crystal layers has a selective reflection wavelength zone and the selective reflection wavelength zone is continuous.

In the optical recording medium of the present invention, each of the cholesteric liquid crystal layers each of which is composed of the filter layer has circularity polarized light separating property, the rotation direction of the helix is the same to each other, the selective reflection central wavelength is different from each other, and the selective reflection wavelength zone is continuous. By such a configuration , angle dependency of reflection of irradiation light can be eliminated without causing deviation in selective reflection wavelength even when an incidence angle is changed.

In the optical recording medium of the present invention, an aspect in which a light having the first wavelength is transmitted and a light having the second wavelength which is different from the light with the first wavelength is reflected; an aspect in which the light having the first wavelength has a wavelength of 350 nm to 600 nm and the light having the second wavelength has a wavelength of 600 nm to 900 nm; the aspect in which a light reflectance at $\lambda_0$ to $\lambda_0$/cos20° ($\lambda_0$ represents the irradiation light wavelength) is 40% or more, the aspect in which a light reflectance at $\lambda_0$ to $\lambda_0$/cos40° ($\lambda_0$ represents the irradiation light wavelength) is 40% or more, an aspect in which the substrate has a servo pit pattern, an aspect having a reflective film on the servo pit pattern surface, and an aspect in which the reflective film is a metal reflective film.

In the optical recording medium of the present invention, an aspect having a first gap layer to smoothen the under substrate surface between the filter layer and the reflective film is preferable. According to the optical recording medium of the present invention, by providing the first gap layer between the filter layer and the reflective film, it is possible to protect the reflective film as well as control the size of hologram generated on the recording layer.

In the optical recording medium of the present invention, an aspect having a second gap layer between the recording layer and the filter layer is preferable. According to the optical recording medium of the present invention, by providing the second gap layer, it is possible to make points focused by an information beam and a reproduction beam present. When the focused area is filled with a photopolymer, a monomer is excessively consumed due to excessive exposure to thereby reduce a multiple recording capacity. Thus, it is effective to provide the second gap layer which is inert and transparent.

The method for producing the optical recording medium of the present invention is a method for producing the above optical recording medium of the present invention, and includes forming a filter layer composed of a laminate in which two or more cholesteric liquid crystal layers are laminated on the under substrate.

According to the method for producing the optical recording medium of the present invention, in the forming of a filter layer, the filter layer composed of the laminate with two or more cholesteric liquid crystal layers laminated on the under substrate is formed. As a result, the optical recording medium can be efficiently massproduced at low cost by a simple method such as coating method.

In the optical recording method of the present invention, the optical recording medium is irradiated with an information beam and a reference beam as a coaxial light flux, and information is recorded on the recording layer based on an interference pattern formed by interference between the information beam and the reference beam.

According to the optical recording method of the present invention, by irradiating the optical recording medium of the present invention with the information beam and the reference beam as a coaxial light flux and recording information on the recording layer based on the interference pattern formed by interference between the information beam and the reference beam to thereby realize high density recording which has not been conventionally achieved.

In the optical reproducing method of the present invention, the interference pattern recorded on the recording layer by the optical recording method of the present invention is irradiated with a reference beam to thereby reproduce the information.

According to the optical reproducing method of the present invention, it is possible to efficiently and correctly read out the interference patterns recorded in the recording layer by the optical recording method of the present invention and reproduce the high density recording information.

Brief Description of Drawings

FIG.1 is a schematic sectional view showing one example of a structure of a conventional optical recording medium.

FIG. 2 is a graph showing a reflection property to an incident light from a front side (0°) of a filter for optical recording media of the present invention.

FIG. 3 is a graph showing a reflection property to an incident light from 40° inclined direction in the filter for optical recording media of the present invention.

FIG. 4 is a graph showing a reflection property to an incident light from a front side (0°) of another filter for optical

recording media of the present invention.

FIG. 5 is a graph showing a reflection property to an incident light from 20° inclined direction in another filter for optical recording media of the present invention.

FIG. 6 is a schematic sectional view showing one example of the optical recording medium according to a first embodiment by the present invention.

FIG. 7 is a schematic sectional view showing one example of the optical recording medium according to a second embodiment by the present invention.

FIG. 8 is an illustrative view showing one example of an optical system mounted around the optical recording medium of the present invention.

FIG. 9 is a block diagram showing one example of the entire structure of an optical recording reproducing apparatus mounted with the optical recording medium of the present invention.

Best Mode for Carrying Out the Invention

(Filter for optical recording media)

The filter for optical recording media of the present invention has two or more layers of cholesteric liquid crystal layers laminated to one another and further has a substrate and other members in accordance with necessity.

<Cholesteric liquid crystal layer>

The cholesteric liquid crystal layer contains at least a nematic liquid crystal compound and a chiral compound and further contains a polymerizable monomer and other components in accordance with necessity.

The cholesteric liquid crystal layers are obtained by laminating two or more layers. The number of laminated layers is not particularly limited as long as two or more cholesteric liquid crystal layers are formed, and may be appropriately selected depending on the purpose, and for example, 2 to 10 layers are preferable. When more than 10 laminated layers are used, on the contrary, the production efficiency may be lowered and the object and effects of the present invention may not be sometimes accomplished.

As the cholesteric liquid crystal layer, those having circularly polarized light separating function are preferable. The cholesteric liquid crystal layer having the circularly polarized light separating function has the selective reflection property that only the light of a circularly polarized light component in which the rotation direction (clockwise or counterclockwise) of the helix in the liquid crystal is identical to a circularly polarized light direction and the wavelength is a helical pitch of the liquid crystal is reflected. By utilizing thie selective reflection property of the cholesteric liquid crystal layer, only the circularly polarized light having the specific wavelength is transmitted and separated from natural light in a certain wavelength zone, and the remaining thereof is reflected.

Therefore, in the cholesteric liquid crystal layer, it is preferable that the light having the first wavelength is transmitted and the circularly polarized light having the second wavelength, which is different from the light having the first wavelength, is reflected. The light having the first wavelength preferably has a wavelength of 350 nm to 600 nm and the light having the second wavelength preferably has a wavelength of 600 nm to 900 nm.

The selective reflection property of the cholesteric liquid crystal layer is limited to the specific wavelength zone, and is difficult to cover a visible light region. That is, a wavelength zone width $\Delta\lambda$ of the selective reflection in the cholesteric liquid crystal layer is represented by the following mathematical formula 1.

< Mathematical formula 1 >

$$\Delta\lambda = 2\lambda\,(ne-no)/(ne+no):$$

wherein "no" represents a refractive index of a nematic liquid crystal molecule contained in the cholesteric liquid crystal layer against a normal light, "ne" represents the refractive index of the nematic liquid crystal molecule against an abnormal light, and $\lambda$ represents a central wavelength of the selective reflection.

As shown in the above mathematical formula 1, the wavelength zone width $\Delta\lambda$ of the selective reflection depends on a molecular structure of the nematic liquid crystal itself. In the above mathematical formula 1, when (ne-no) is increased, the wavelength zone width $\Delta\lambda$ of the selective reflection can be widened, however, the (ne-no) is typically 0.3 or less. When it exceeds 0.3, other functions as the liquid crystal, e.g., the orientation property and the liquid crystal temperature are insufficient, and the practical application is difficult. Therefore, the wavelength zone width $\Delta\lambda$ of the selective reflection in the cholesteric liquid crystal layer is maximally about 150 nm and preferably about 30 nm to 100 nm typically.

The central wavelength λ of the selective reflection in the cholesteric liquid crystal layer is represented by the following mathematical formula 2.

< Mathematical formula 2 >

$$\lambda = (ne+no)P/2:$$

wherein "ne" and "no" are the same as defined in the above mathematical formula 1, and P represents the helical pitch length required for a 360-degree roll twist of the cholesteric liquid crystal layer.

As shown in the above mathematical formula 2, the central wavelength λ of the selective reflection depends on the average refractive index and the helical pitch length P of the cholesteric liquid crystal layer if the helical pitch in the cholesteric liquid crystal layer is constant. Thus, to enlarge the selective reflection property of the cholesteric liquid crystal layer, it is preferable that each of the cholesteric liquid crystal layers has a different central wavelength of the selective reflection from each other and the rotation direction (clockwise or counterclockwise) of the helix in each of the cholesteric liquid crystal layers is the same to each other. It is also preferable that the wavelength zone of the selective reflection in each of the cholesteric liquid crystal layers is continuous. Here, the being "continuous" means that no gap is present between two wavelength zones of the selective reflection and the reflectance in this range is substantially 40% or more.

Therefore, it is preferable that a distance between the central wavelengths λ of the selective reflection in respective cholesteric liquid crystal layers is in the range in which the wavelength zone of the selective reflection is continuous to at least one of the other wavelength zones of the selective reflection.

In the filter for optical recording media, it is preferable that a light reflectance at $\lambda_0$ to $\lambda_0$/cos20° ($\lambda_0$ represents the irradiation light wavelength) in the range of ±20° is 40% or more when the perpendicular incidence is 0°. It is particularly preferable that a light reflectance at $\lambda_0$ to $\lambda_0$/cos40° ($\lambda_0$ represents the irradiation light wavelength) in the range of ±40° is 40% or more when the perpendicular incidence is 0°.

When the light reflectance in the range of $\lambda_0$ to $\lambda_0$/cos20°, particularly $\lambda_0$ to $\lambda_0$/cos40° ($\lambda_0$ represents the irradiation light wavelength) is 40% or more, it is possible to eliminate the angle dependency of the reflection of irradiation light and employ a lens optical system used for ordinary optical recording media.

Specifically, when three cholesteric liquid crystal layers in which the central wavelengths of the selective reflection are different from each other and the rotation directions of the helix in respective cholesteric liquid crystal layers are the same to each other are laminated, the filter for optical recording media having the reflection property shown in FIG. 2 is obtained. FIG. 2 shows that the reflection property to the perpendicular incident light from the front face (0°) is 40% or more. In contrast, in the case of an incident light from the inclined direction, the wavelength shifts to a short wavelength side, and when inclined at 40° in the liquid crystal, the reflection property shown in FIG. 3 is exhibited.

Likewise, when two cholesteric liquid crystal layers in which the central wavelengths of the selective reflection are different from each other and the rotation directions of the helix in respective cholesteric liquid crystal layers are the same to each other are laminated, the filter for optical recording media having the reflection property shown in FIG. 4 is obtained. This FIG. 4 shows that the reflection property against the perpendicular incident light from the front face (0°) is 40% or more. On the contrary, in the case of the incident light from a inclined direction, the wavelength shifts to the short wavelength side, and when inclined at 20° in the liquid crystal, the reflection property shown in FIG. 5 is exhibited.

For a reflection region $\lambda_0$ to 1.3$\lambda_0$ shown in FIG. 2, when $\lambda_0$ is 532 nm, 1.3$\lambda_0$ is 692 nm. When the servo light has a wavelength of 655 nm, the servo light is reflected. The range of $\lambda_0$ to 1.3$\lambda_0$ shown here is an adequacy for the ±40° incident light in the filter for optical recording media. When such largely inclined light is used, servo control can be performed without trouble if the servo light within the ±20° incident light is used by masking itself. If the average refractive index of each of the cholesteric liquid crystal layers in the filter used is sufficiently increased, it is easy to design all the incidence angles within ±20° in the filter for optical recording media. In this case, two cholesteric liquid crystal layers of $\lambda_0$ to 1.1$\lambda_0$ shown in FIG. 4 could be laminated, and thus there is no trouble to transmit the servo light.

Therefore, from the results in FIGs 2 to 5, even when the incidence wavelength is inclined at 0° to 20° (preferably 0° to 40°), the reflectance of 40% or more is assured in the filter for optical recording media of the present invention. Thus, a filter for optical recording media having no trouble in reading out the signal is obtained.

The cholesteric liquid crystal layer is not particularly limited as long as it satisfies the above properties, can be appropriately selected depending on the purpose, however, as described above, it contains a nematic liquid crystal compound and a chiral compound, and contains a polymerizable monomer and if necessary other components.

-Nematic liquid crystal compound-

The nematic liquid crystal compound is characterized in that its liquid crystal phase is solidified at temperature equal to or lower than the liquid crystal transition temperature, and can be appropriately selected from liquid crystal compounds, macromolecular liquid crystal compounds and polymerizable liquid crystal compounds having a refractive index anisotropy $\Delta n$ of 0.10 to 0.40 depending on the purpose. The nematic liquid crystal can be used as a solid phase by orientating itself using an orientated substrate that has been subjected to an orientation treatment such as rubbing during a liquid crystal state upon melting, and directly cooling it to solidify.

The nematic liquid crystal compound is not particularly limited, can be appropriately selected depending on the purpose, and for example, the following compounds can be exemplified.

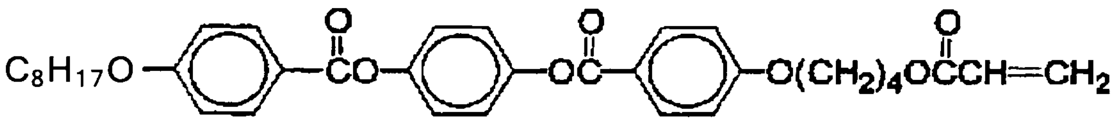

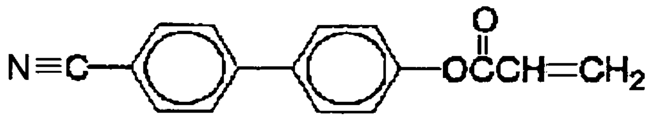

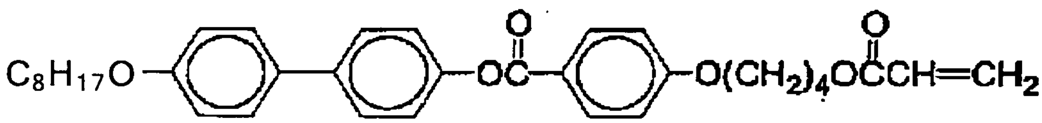

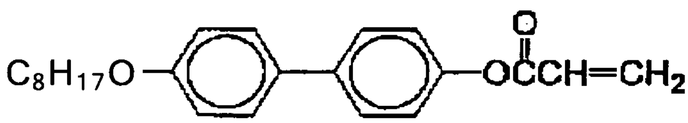

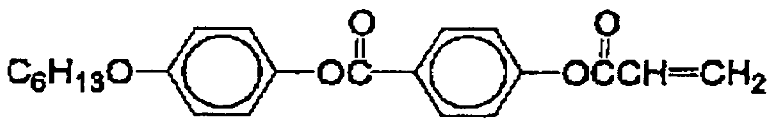

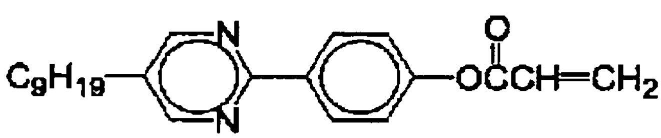

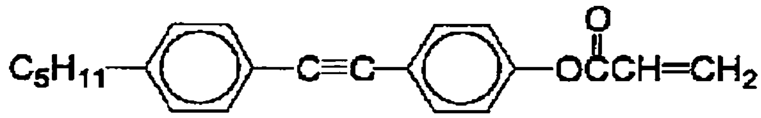

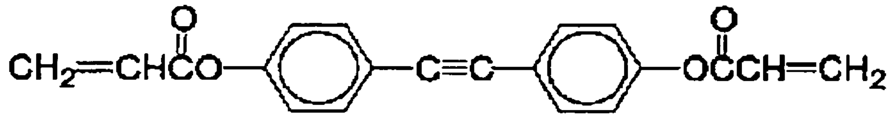

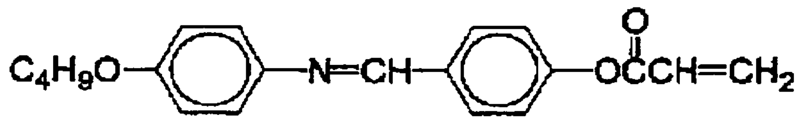

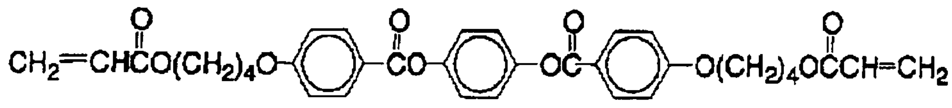

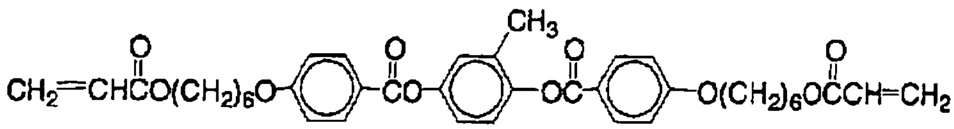

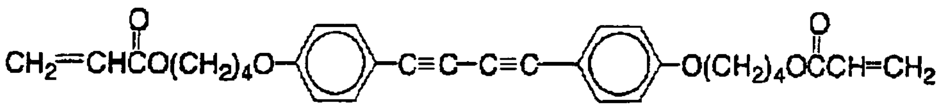

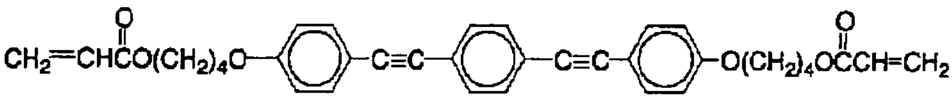

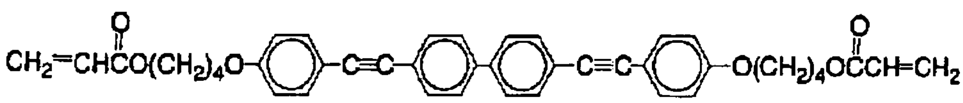

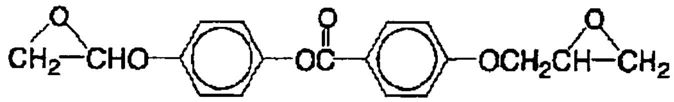

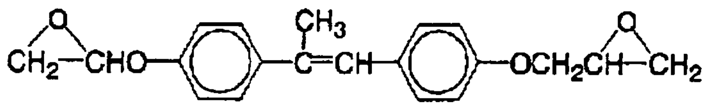

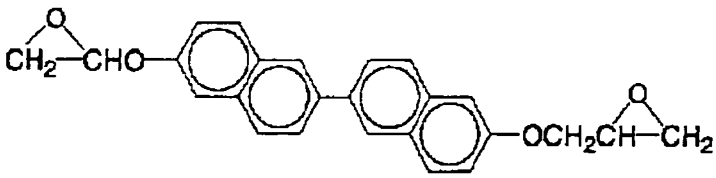

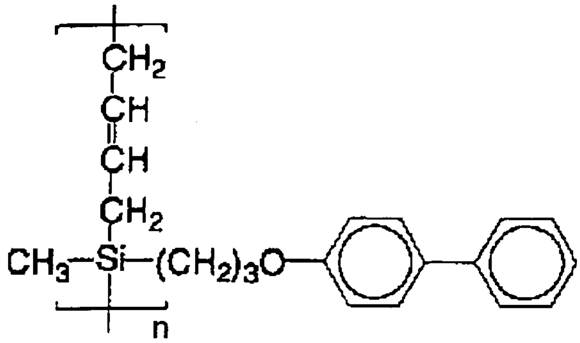

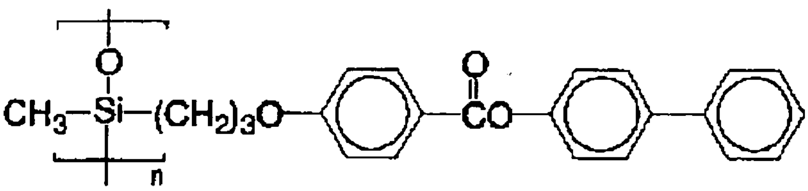

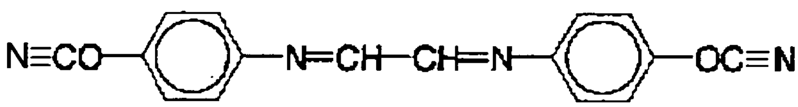

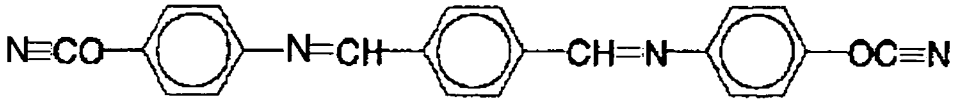

In the above formulas, n represents an integer of 1 to 1000. Those obtained by changing a side chain linking group to the following structure in the above example compounds can also be preferably exemplified.

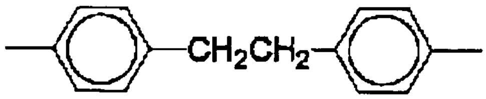

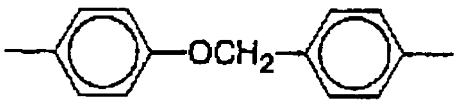

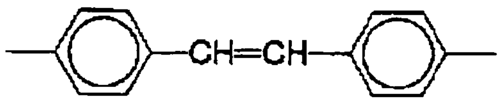

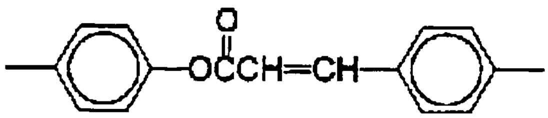

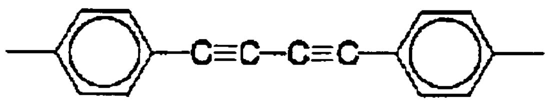

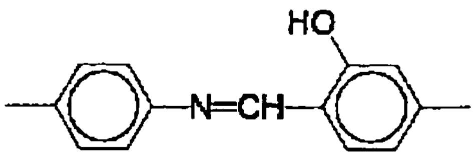

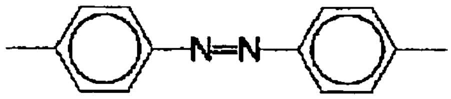

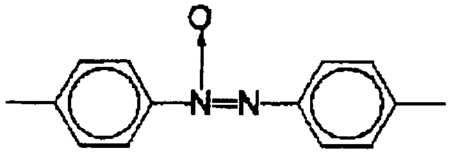

Among the above example compounds, as the nematic liquid crystal compound, the nematic liquid crystal compounds having a polymerizable group in the molecule are preferable in terms of assuring a sufficient curability. Among them, ultraviolet (UV) ray polymerizable liquid crystals are suitable. As the UV polymerizable liquid crystal, commercially available products can be used. For example, a brand name PALIOCOLOR LC242 supplied from BASF, a brand name E7 supplied from Merck, a brand name LC-SILICON-CC3767 supplied from Wacker-Chem, and brand names L35, L42, L55, L59, L63, L79 and L83 supplied from Takasago International Corporation are exemplified.

The content of the nematic liquid crystal compound is preferably 30% by mass to 99% by mass and more preferably 50% by mass to 99% by mass relative to the total solid content mass in each of the cholesteric liquid crystal layers. When the content is less than 30% by mass, the orientation of the nematic liquid crystal compound is sometimes insufficient.

-Chiral compound-

The chiral compound is not particularly limited, can be appropriately selected from those known in the art depending on the purpose, and examples thereof include compounds shown below in addition to isomanide compounds, catechin compounds, isosorbide compounds, fenchone compounds and carvone compounds in terms of enhancing hue and color purity improvement of the liquid crystal compounds. These may be used alone or in combination of two or more.

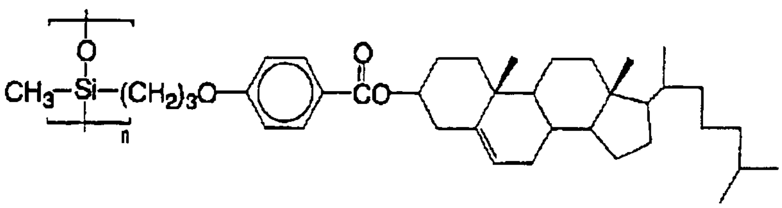

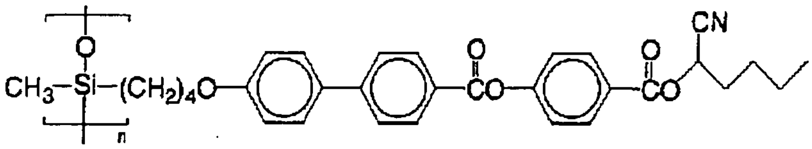

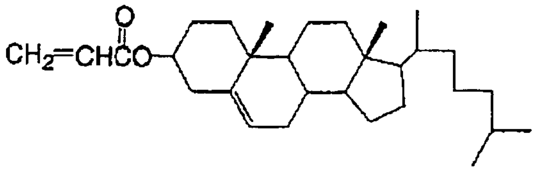

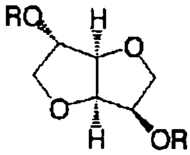

R = 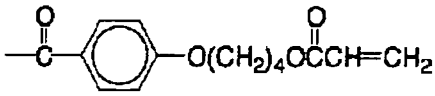

Left-handed helix

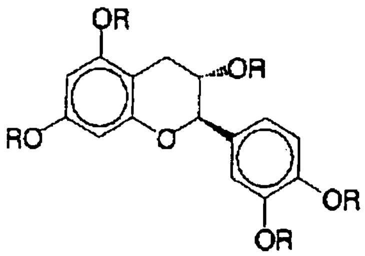

R = 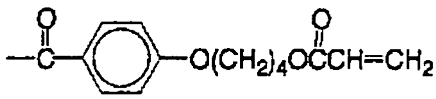

Left-handed helix

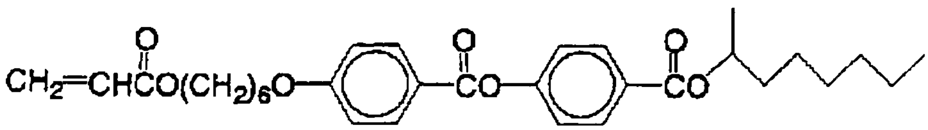

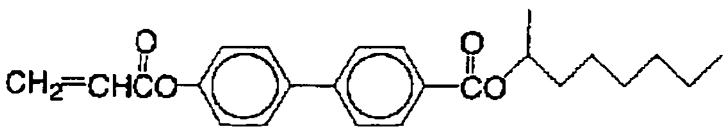

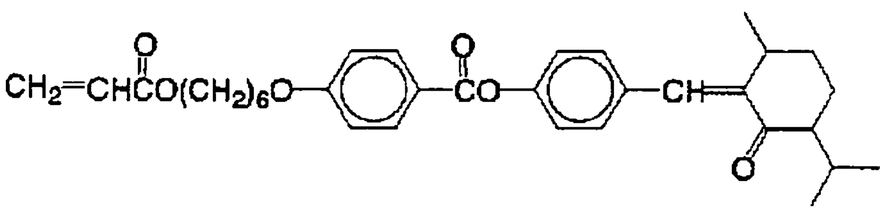

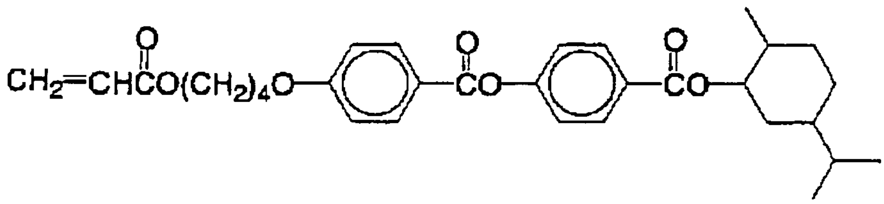

As the chiral compound, commercially available products can be used, and examples of the commercially available products include brand names S101, R811 and CB15 supplied from Merck, and a brand name PALIOCOLOR LC756 supplied from BASF.

The content of the chiral compound is preferably 0% by mass to 30% by mass and more preferably 0% by mass to 20% by mass relative to the total solid content mass in each of the cholesteric liquid crystal layers. When the content is more than 30% by mass, the orientation of the cholesteric liquid crystal layer is sometimes insufficient.

-Polymerizable monomer-

A polymerizable monomer can also be used in combination in the cholesteric liquid crystal layer for the purpose of enhancing the degree of cure such as film strength. When the polymerizable monomer is combined, the kinking force of the liquid crystal due to light irradiation is changed (patterning) (e.g., the distribution of the wavelengths of the selective reflection is formed), subsequently, its helical structure (selective reflection property) is immobilized, and the strength of the cholesteric liquid crystal layer after being immobilized can be further enhanced. However, when the liquid crystal compound has a polymerizable group in the same molecule, it is not always necessary to add.

The polymerizable monomer is not particularly limited, can be appropriately selected from those known in the art depending on the purpose, and examples thereof include monomers having an ethylenically unsaturated bond. Specifically, multifunctional monomers such as pentaerythritol tetraacrylate and dipentaerythritol hexaacrylate are exemplified.

Specific examples of the monomers having an ethylenically unsaturated bond include the compounds shown below. These may be used alone or in combination of two or more.

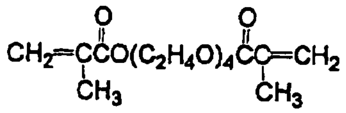

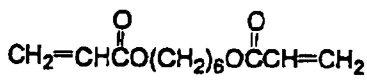

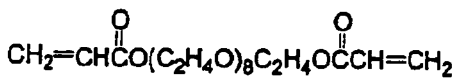

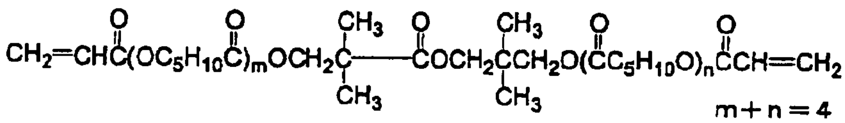

m+n = 4

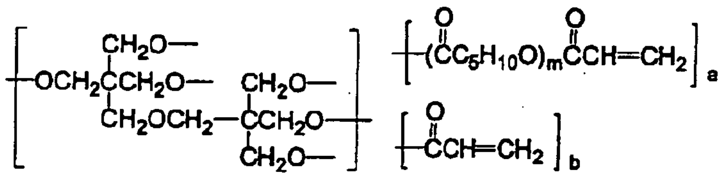

A : m = 1, a = 6, b = 0
B : m = 2, a = 6, b = 0

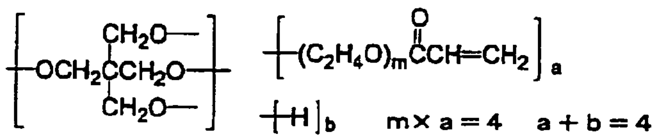

m × a = 4   a + b = 4

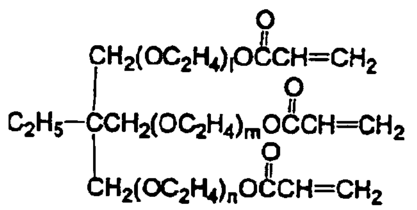

l + m + n = 3.5

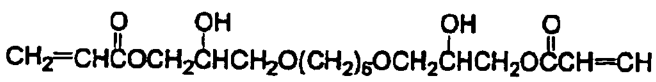

The amount of the polymerizable monomer to be added is preferably 0% by mass to 50% by mass and more preferably 1% by mass to 20% by mass relative to the total solid content mass in each of the cholesteric liquid crystal layers. When the amount is more than 50% by mass, the orientation of the cholesteric liquid crystal layer is sometimes inhibited.

- Other components -

The other component is not particularly limited, can be appropriately selected depending on the purpose, and examples thereof include, photopolymerizable initiators, sensitizers, binder resins, polymerization inhibitors, solvents, surfactants, thickeners, dyes, pigments, ultraviolet ray absorbers and gelling agents.

The photopolymerizable initiators are not particularly limited, can be appropriately selected from those known in the art depending on the purpose, and examples thereof include p-methoxyphenyl-2,4-bis(trichloromethyl)-s-triazine, 2-(p-butoxystyryl)-5-trichloromethyl 1,3,4-oxadiazol, 9-phenylacridine, 9,10-dimethylbenzfenadine, benzophenone/Michler's ketone, hexaarylbiimidazole/mercaptobenzimidazole, benzyldimethylketal, and thioxanthone/amine. These may be used alone or in combination of two or more.

As the photopolymerizable initiator, commercially available products can be used, and examples of the commercially available products include IRGACURE 907, IRGACURE 369, IRGACURE 784 and IRGACURE 814 supplied from Ciba Specialty Chemicals, and Lucilin TPO supplied from BASF.

The amount of the photopolymerizable initiator to be added is preferably 0.1 % by mass to 20 % by mass and more preferably 0.5 % by mass to 5% by mass relative to the total solid content mass in each of the cholesteric liquid crystal layers. When the amount is less than 0.1 % by mass, a long time is sometimes required because a curing efficiency upon light irradiation is low. When it exceeds 20% by mass, a light transmittance at an ultraviolet ray region to a visible light region is sometimes inferior.

The sensitizer is added for enhancing the curing degree of the cholesteric liquid crystal layer as needed.

The sensitizer is not particularly limited, can be appropriately selected from those known in the art depending on the purpose, and examples thereof include diethyl thioxanthone and isopropyl thioxanthone.

The amount of the sensitizer to be added is preferably 0.001 % by mass to 1.0% by mass relative to the total solid content mass in each of the cholesteric liquid crystal layers.

The binder resin is not particularly limited, can be appropriately selected from those known in the art depending on the purpose, and examples thereof include polyvinyl alcohol; polystyrene compounds such as polystyrene and poly-$\alpha$-methylstyrene; cellulose resins such as methylcellulose, ethylcellulose and acetylcellulose; acidic cellulose derivatives having carboxyl group in the side chain; acetal resins such as polyvinyl formal and polyvinyl butyral; methacrylic acid copolymers, acrylic acid copolymers, itaconic acid copolymers, crotonic acid copolymers, maleic acid copolymers, partially esterified maleic acid copolymers; homopolymers of alkyl acrylate ester or homopolymers of alkyl methacrylate ester; other polymers having hydroxyl group. These may be used alone or in combination of two or more.

Examples of the alkyl groups in the homopolymers of alkyl acrylate ester or the homopolymers of alkyl methacrylate ester include methyl, ethyl, n-propyl, n-butyl, isobutyl, n-hexyl, cyclohexyl and 2-ethylhexyl groups.

Examples of the other polymers having the hydroxyl group include benzyl (meth)acrylate/ (homopolymer of methacrylic acid) acrylic acid copolymers and polygenetic copolymers of benzyl (meth)acrylate/(meth)acrylic acid/another monomer.

The amount of the binder resin to be added is preferably 0% by mass to 80% by mass and more preferably 0% by mass to 50% by mass relative to the total solid content mass in each of the cholesteric liquid crystal layers. When the amount is more than 80% by mass, the orientation of the cholesteric liquid crystal layer sometimes is insufficient.

The polymerization inhibitor is not particularly limited, can be appropriately selected depending on the purpose, and examples thereof include hydroquinone, hydroquinone monomethyl ether, phenothiazine, benzoquinone or derivatives thereof.

The amount of the polymerization inhibitor to be added is preferably 0 % by mass to 10% by mass and more preferably 100 ppm to 1% by mass relative to the solid content of the polymerizable monomer.

The solvent is not particularly limited, can be appropriately selected from those known in the art depending on the purpose, and examples thereof include alkoxypropionate esters such as methyl 3-methoxypropionate ester, ethyl 3-methoxypropionate ester, propyl 3-methoxypropionate ester, methyl 3-ethoxypropionate ester, ethyl 3-ethoxypropionate ester and propyl 3-ethoxypropionate ester; esters of alkoxy alcohol such as 2-methoxypropyl acetate, 2-ethoxypropyl acetate and 3-methoxypropyl acetate; lactate esters such as methyl lactate and ethyl lactate; ketones such as methyl ethyl ketone, cyclohexanone and methyl cyclohexanone; $\gamma$-butylolactone, N-methyl pyrrolidone, dimethyl sulfoxide, chloroform and tetrahydrofuran. These may be used alone or in combination of two or more.

< Base >

For material of the base, its shape, structure and size are not particularly limited, and can be appropriately selected depending on the purpose. Examples of the shape include a flat plate and a sheet. The structure may be a monolayer structure or a laminated structure. The size can be appropriately selected depending on the size of the filter for optical recording media.

Materials of the base are not particularly limited, and any of inorganic materials and organic materials can be suitably used.

Examples of the inorganic materials include glasses, quartz and silicon.

Examples of the organic materials include acetate based resins such as triacetylcellulose, polyester based resins, polyether sulfone based resins, polysulfone based resins, polycarbonate based resins, polyamide based resins, polyimide based resins, polyolefin based resins, acryl based resins, polynorbornene based resins, cellulose based resins, polyacrylate based resins, polystyrene based resins, polyvinyl alcohol based resins, polyvinyl chloride based resins, polyvinylidene chloride based resins, and polyacryl based resins. These may be used alone or in combination of two or more.

The base may be appropriately synthesized, or commercially available products may be used.

The thickness of the base is not particularly limited, can be appropriately selected depending on the purpose, and is preferably 10 $\mu$m to 500 $\mu$m and more preferably 50 $\mu$m to 300 $\mu$m. When the thickness of the substrate is less than 10 $\mu$m, adhesiveness is sometimes lowered due to flexibility of the substrate. Meanwhile, when it exceeds 500 $\mu$m, focus positions of the information beam and the reference beam must be shifted substantially, and thus the size of the optical system may be sometimes large inconveniently.

As the method for forming the filter for optical recording media, the filter can be suitably manufactured by the method for producing the optical recording medium described later, and for example, each of the cholesteric liquid crystal layers can be formed by applying a coating solution for each of the cholesteric liquid crystal layers, prepared using the above solvent on the base by a desired applying method.

As a technique having the best mass production aptitude, it is preferable that the base is prepared in a roll

shape and the coating solution for each of the cholesteric liquid crystal layers is applied on the base by a lengthy continuous coater such as a bar coater, a die coater, a blade coater and a curtain coater.

The thickness of each of the cholesteric liquid crystal layers is preferably 1 μm to 10 μm and more preferably 2 μm to 7 μm. When the thickness is less than 1 μm, the selective reflectance may be sometimes insufficient. When it exceeds 10 μm, the uniform orientation of the liquid crystal layer may be sometimes disturbed.

The thickness (total thickness of respective cholesteric liquid crystal layers except for the base) of the filter for optical recording media is, for example, preferably 1 μm to 30 μm and more preferably 3 μm to 10 μm.

The cholesteric liquid crystal layer is not particularly limited, and can be appropriately selected depending on the purpose. It is preferable that the cholesteric liquid crystal layer is disposed on the under substrate after applying the coating solution for each of the cholesteric liquid crystal layers on the base, being orientated and immobilized and being punched out including the base into a disc shape. When used for the filter layer of the optical recording medium, it is possible to directly provide the cholesteric liquid crystal layer on the under substrate not through the base.

The filter for optical recording media of the present invention can be used in various fields, can be suitably used for the formation or the production of the holographic optical recording medium, and can be suitably used for the following holographic optical recording medium and the method for production thereof, as well as the optical recording method and the optical reproducing method of the present invention.

(Optical recording medium)

The optical recording medium of the present invention has an upper substrate, an under substrate, a recording layer on the under substrate and a filter layer between the under substrate and the recording layer, has a reflective film, a first gap layer, a second gap layer and further has if necessary other layers.

As the filter layer, the filter layer for optical recording media of the present invention is used.

- Substrate -

For the substrate, its shape, structure and size are not particularly limited, and can be appropriately selected depending on the purpose. Examples of the shape include a disc shape and a card shape. It is necessary to select the material which can assure the mechanical strength of the optical recording medium. When the beams used for recording and reproducing enter through the substrate, the substrate is necessary to be sufficiently transparent in the wavelength region of the beams used.

As the substrate material, typically glasses, ceramics and resins are used, and the resin is particularly suitable in terms of molding property and cost.

Examples of the resins include polycarbonate resins, acryl resins, epoxy resins, polystyrene resins, acrylonitrile-styrene copolymers, polyethylene resins, polypropylene resins, silicone resins, fluorine resins, ABS resins and urethane resins.

Among them, the polycarbonate resins and the acryl resins are particularly preferable in terms of molding property, optical property and cost.

The substrate may be appropriately synthesized or the commercially available products may be used.

In the substrate, address-servo areas as multiple positioning areas linearly extending to a radius direction are provided with a given angle interval, and a sector interval between adjacent address-servo areas is a data area. In the address-servo area, information for performing focus servo and tracking servo by a sampled servo mode and the address information have been recorded in advance by emboss pits (servo pits) (preformat). The focus servo can be performed using a reflection side of the reflective film. As the information for performing the tracking servo, for example, wobble pits can be used. When the optical recording medium has a card shape, the servo pit pattern is not indispensable.

The thickness of the substrate is not particularly limited, can be appropriately selected depending on the purpose, and is preferably 0.1 mm to 5 mm and more preferably 0.3 mm to 2 mm. When the thickness of the substrate is less than 0.1 mm, deformation of the shape in disc storage is not sometimes suppressed. When it exceeds 5 mm, the weight of the entire disc is heavy and excessive load is sometimes given to a drive motor.

- Recording layer -

In the recording layer, information can be recorded by utilizing the holography. The material whose optical properties such as absorbance index and refractive index are changed depending on the intensity of electromagnetic wave when the electromagnetic wave having the given wavelength is irradiated is used.

Materials of the recording layer are not particularly limited, can be appropriately selected depending on the purpose, and examples thereof include (1) photopolymers producing a polymerization reaction by light irradiation to polymerize, (2) photorefractive materials exhibiting a photorefractive effect (the light irradiation produces a space charge

distribution to modify the refractive index), (3) photochromic materials in which the light irradiation causes molecular isomerization to modify the refractive index, (4) inorganic materials such as lithium niobate and barium titanate, and (5) chalcogen materials.

The photopolymer (1) is not particularly limited, can be appropriately selected depending on the purpose, and for example, contains a monomer and a photoinitiator, and further contains other components such as sensitizers and oligomers if necessary.

As the photopolymers, those described in, for example, "Photopolymer Handbook" (Kogyo Chosakai Publishing Co., Ltd., 1989), "Photopolymer Technology" (Nikkan Kogyo Shinbun,1989), SPIE Proceedings Vol. 3010 p354-372 (1997) and SPIE Proceedings Vol. 3291 p89-103 (1998) can be used. Also, the photopolymers described in US Patent Nos. 5,759,721, 4,942,112, 4,959,284 and 6,221,536, International Publication Nos. WO97/44714, WO97/13183, WO99/26112 and WO97/13183, Japanese Patent (JP-B)Nos. 2880342, 2873126, 2849021, 3057082 and 3161230, Japanese Patent Application Laid-Open (JP-A) Nos. 2001-316416 and 200-275859 can be used.

Examples of the method of irradiating the photopolymer with a recording light to change the optical property include a method of utilizing diffusion of a low molecular component. In order to alleviate the volume change upon polymerization, a component which diffuses in a direction opposite to a polymerization component may be added, or a compound having an acidic cleavage structure may be separately added in addition to the polymer. When the recording layer is formed using the photopolymer containing the low molecular component, the structure capable of keeping a liquid in the recording layer is sometimes required. When the compound having the acidic cleavage structure is added, the volume change may be inhibited by compensating an expansion caused by the cleavage and a shrinkage caused by the monomer polymerization.

The monomer is not particularly limited, can be appropriately selected depending on the purpose, and includes radical polymerization type monomers having an unsaturated bond such as acryl and methacryl groups and cation polymerization type monomers having an ether structure such as epoxy and oxetane rings. These monomers may be monofunctional or multifunctional, and may also be those utilizing a photo crosslinking reaction.

Examples of the radical polymerization type monomers include acryloylmorpholine, phenoxyethyl acrylate, isobornyl acrylate, 2-hydroxypropyl acrylate, 2-ethylhexyl acrylate, 1,6-hexanediol diacrylate, tripropylene glycol diacrylate, neopentyl glycol PO modified diacrylate, 1,9-nonanediol diacrylate, hydroxypivalate neopentyl glycol diacrylate, EO modified bisphenol A diacrylate, polyethylene glycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethyl acrylate, 2-carbazoyl-9-yl-ethyl acrylate, (trimethylsilyloxy)dimethylsilylpropyl acrylate, vinyl-1-naphthoate and N-vinyl carbazole.

Examples of the cation polymerization type monomers include bisphenol A epoxy resins, phenol novolak epoxy resins, glycerol triglycidyl ether, 1,6-hexane glycidyl ether, vinyl trimethoxysilane, 4-vinylphenyl trimethoxysilane, γ-methacryloxypropyl triethoxysilane and compounds represented by the following structural formulas (A) to (E).

These monomers may be used alone or in combination of two or more.

The photoinitiator is not particularly limited as long as it has a sensitivity to the recording light, and examples thereof include materials which induce radical polymerization, cation polymerization or crosslinking reaction by light irradiation.

Examples of the photoinitiator include 2,2'-bis(o-chlorophenyl)-4,4',5,5'-tetraphenyl-1,1'-biimidazole, 2,4,6-tris (trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiiodonium tetrafluoroborate, 4-diethylaminophenylbenzenediazonium hexafluorophosphate, benzoin, 2-hydroxy-2-methyl-phenylpropane-2-one, benzophenone, thioxanthone, 2,4,6-trimethylbenzoyldiphenylacylphosphine oxide, triphenylbutyl borate tetraethyl ammonium and titanocene compounds represented by the following structural formulas. These may be used alone or in combination of two or more. A sensitizing dye may be combined in accordance with the wavelength of the light to be irradiated.

The photopolymer is obtained by stirring and mixing the monomer, the photoinitiator and if necessary the other component to react them. If the resulting photopolymer has a sufficiently low viscosity, the recording layer can be formed by casting. Meanwhile, when the photopolymer has a high viscosity, which can not be cast, the recording layer can be formed by placing the photopolymer on the under substrate using a dispenser and pushing the upper substrate on the photopolymer as if covering with a lid to spread evenly.

The photoreactive material (2) is not particularly limited as long as it exhibits the photoreactive effect, can be appropriately selected depending on the purpose, and contains, for example, a charge generating material and a charge transporting material, and further if necessary contains the other components.

The charge generating material is not particularly limited, can be appropriately selected depending on the purpose, and examples thereof include, phthalocyanine dyes/ pigments such as metal phthalocyanine and non-metal phthalocyanine or derivative thereof; naphthalocyanine dyes/pigments; azo based dyes/pigments such as monoazo-, diazo- and triazo-dyes/pigments; perylene based dyes/ pigments; indigo based dyes/ pigments; quinacridone based dyes/ pigments; polycyclic quinone based dyes/pigments such as anthraquinone and anthoanthorone; cyanine based

dyes/ pigments; charge transfer complexes composed of an electron receiving substance and an electron releasing substance, typified by TTF-TCNQ; azulenium salts; fullerene typified by $C_{60}$ and $C_{70}$ and methanofullerene which is a derivative thereof. These may be used alone or in combination of two or more.

The electron transporting material is the material which transports a hole or an electron, and may be a low molecular compound or a high molecular compound.

The electron transporting material is not particularly limited, can be appropriately selected depending on the purpose, and examples thereof include nitrogen-containing cyclic compounds such as indole, carbazole, oxazole, inoxazole, thiazole, imidazole, pyrazole, oxadiazole, pyrazoline, thiathiazole and triazole, or derivative thereof; hydrazine compounds; triphenylamines; triphenylmethanes; butadienes; stilbenes; quinone compounds such as anthraquinone diphenoquinone, or derivatives thereof; fullerene such as $C_{60}$ and $C_{70}$ and derivatives thereof; $\pi$ conjugated polymers or oligomers such as polyacetylene, polypyrrol, polythiophene and polyaniline; $\sigma$ conjugated polymers or oligomers such as polysilane and polygermane; polycyclic aromatic compounds such as anthracene, pyrene, phenanthrene and coronen. These may be used alone or in combination of two or more.

As the method of forming the recording layer using the photoreactive material, for example, a coating film is formed using a coating solution dissolving or dispersing the photoreactive material in a solvent, and the recording film can be formed by removing the solvent from this coating film. Also, the recording layer can be formed by forming a coating film using the photoreactive material heated to fluidize and rapidly cooling this coating film.

The photochromic material (3) is not particularly limited as long as it causes a photochromic reaction, can be appropriately selected depending on the purpose, and examples thereof include azobenzene compounds, stilbene compounds, indigo compounds, thioindigo compounds, spiropyran compounds, spirooxazine compounds, fluxide compound, anthracene compounds, hydrazon compounds and cinnamate compounds. Among them, the azobenzene derivatives and the stilbene derivatives which cause the structural change due to cis-trans isomerization by light irradiation, and the spiropyran derivatives and the spirooxazine derivatives which cause the structural change of ring-opening/ring-closing by light irradiation are particularly preferable.

Examples of the chalcogen materials (5) include materials containing chalcogenide glass containing a chalcogen element and metallic particles composed of a metal dispersed in this chalcogenide glass and capable of being diffused in the chalcogenide glass by light irradiation.

The chalcogenide glass is composed of a non-oxide based amorphous material containing the chalcogen element such as S, Te or Se, and is not particularly limited as long as light dope of the metallic particles is possible.

Examples of the amorphous materials containing the chalcogen element include Ge-S based glass, As-S based glass, As-Se based glass and As-Se-Ce based glass. Among them, Ge-S based glass is preferable. When Ge-S based glass is used as the chalcogenide glass, a composition ratio of Ge and S which compose the glass can be optionally changed depending on the wavelength of the light to be irradiated, but the chalcogenide glass having a chemical composition mainly represented by $GeS_2$ is preferable.

The metallic particles are not particularly limited as long as they have the property to undergo the light dope in the chalcogenide glass by light irradiation, can be appropriately selected depending on the purpose, and examples thereof include Al, Au, Cu, Cr, Ni, Pt, Sn, In, Pd, Ti, Fe, Ta, W, Zn and Ag. Among them, Ag, Au or Cu has a property to easily give the light dope and Ag is particularly preferable because it remarkably gives the light dope.

The content of the metallic particles dispersed in the chalcogenide glass is preferably 0.1% by volume to 2 % by volume and more preferably 0.1% by volume to 1.0% by volume based on the total volume of the recording layer. When the content of the metallic particles is less than 0.1 % by volume, a transmittance change due to the light dope is insufficient to reduce an accuracy of the recording. When it exceeds 2% by volume, a light transmittance of the recording material is reduced to sometimes make it difficult to sufficiently give the light dope.

The recording layer can be formed according to a method known in the art depending on the materials, and can be suitably formed by, for example, a vapor deposition method, a wet film forming method, an MBE (molecular beam epitaxy) method, a cluster ion beam method, a molecular lamination method, an LB method, a printing method and a transfer method. Among them, the vapor deposition method and the wet film forming method are preferable.

The vapor deposition is not particularly limited, can be appropriately selected from those known in the art depending on the purpose, and examples thereof include a vacuum vapor deposition method, a resistance heating vapor deposition, a chemical vapor deposition method and a physical vapor deposition method. Examples of the chemical vapor deposition method include a plasma CVD method, a laser CVD method, a heat CVD method and a gas source CVD method.

The formation of the recording layer by the wet film forming method can be suitably performed by using (applying and drying) the solution (coating solution) in which the recording layer materials have been dissolved or dispersed in the solvent. The wet film forming method is not particularly limited, can be appropriately selected from those known in the art depending on the purpose, and examples thereof include an inkjet method, a spin coating method, a kneader coating method, a bar coating method, a blade coating method, a casting method, a dipping method and curtain coating method.

The thickness of the recording layer is not particularly limited, can be appropriately adjusted depending on the purpose, and is preferably 1 μm to 1000 μm and more preferably 100 μm to 700 μm.
When the thickness of the recording layer is within the preferable range, even if shift multiplexing of 10 to 300 is performed, the sufficient S/N ratio can be obtained. When the thickness is within the more preferable range, it is advantageous in that the effect is remarkable.

- Reflection film -

The reflective film is formed on the surface of the servo pit pattern on the substrate.
As material of the reflective film, it is preferable to use a material having a high reflectance for the recording light and reference beam. When the wavelength of the light to be used is 400 nm to 780 nm, it is preferable to use, for example, Al, Al alloys, Ag and Ag alloys. When the wavelength of the light to be used is 650 nm or more, it is preferable to use Al, Al alloys, Ag, Ag alloys, Au, Cu alloys and TiN.
By the use of the optical recording medium, e.g., DVD (digital video disc) reflecting the light and capable of either writing once or deleting, as the reflective film, it is possible to write and rewrite the directory information, e.g., in what area the hologram has been recorded, when has been rewritten and where an error has occurred and how the error has been altered, without affecting the hologram.
The formation of the reflective film is not particularly limited and can be appropriately selected depending on the purpose. Various vapor phase growth methods, e.g., a vacuum vapor deposition method, a sputtering method, a plasma CVD method, a light CVD method, an ion plating method and an electron beam vapor deposition method are used. Among them, the sputtering method is excellent in mass productivity and film quality.
The thickness of the reflective film is preferably 50 nm or more and more preferably 100 nm so as to realize the sufficient reflectance.

- First gap layer -

The first gap layer is provided between the filter layer and the reflective film as needed, and formed for the purpose of smoothening the surface of the under substrate. It is also effective for adjusting the size of a hologram generated in the recording layer. That is, it is effective to provide a gap between the recording layer and the servo pit pattern because in the recording layer, it is necessary to form an interference region of the reference beam for recording and the information beam, having a certain degree of the size.
The first gap layer can be formed by applying a material such as ultraviolet ray curable resin from over a servo pit pattern by spin coating and curing it. When a transparent base whose surface is coated with a ultraviolet ray curable resin is used as the filter layer, the transparent base also works as the first gap layer.
The thickness of the first gap layer is not particularly limited, can be appropriately selected depending on the purpose and is preferably 1 μm to 200 μm.

- Second gap layer-

The second gap layer is provided between the recording layer and the filter layer as needed.
The material of the second gap layer is not particularly limited, can be appropriately selected depending on the purpose, and examples thereof include transparent resin films such as triacetyl cellulose (TAC), polycarbonate (PC), polyethylene terephthalate (PET), polystyrene (PS), polysulfone (PSF), polyvinyl alcohol (PVA) and polymethyl methacrylate (PMMA), or norbornene based resin films such as a brand name ARTON film supplied from JSR and a brand name Zeonor supplied from Zeon Corporation. Among them, those having a high isotropy are preferable, and TAC, PC, the brand name ARTON and the brand name Zeonor are particularly preferable.
The thickness of the second gap layer is not particularly limited, can be appropriately selected depending on the purpose and is preferably 1 μm to 200 μm.
Here, the optical recording medium of the present invention will be further described in detail below with reference to the drawings.

< First embodiment >

FIG. 6 is a schematic sectional view showing the layer configuration of the optical recording medium in a first embodiment of the present invention. In this optical recording medium 21 according to the first embodiment, a servo pit pattern 3 is formed on a substrate 1 made from a polycarbonate resin or a glass, and a reflective film 2 is provided by coating with aluminium, gold or platinum on the servo pit pattern 3. In FIG. 6, the servo pit pattern 3 is formed on the entire surface of the under substrate 1, but as shown in FIG. 1, the servo pit pattern may be formed periodically. A height

of this servo pit is 1750 angstroms (175 nm) in maximum, which is significantly small compared with the thickness of other layers including the substrate.

A first gap layer 8 is formed by applying the material such as ultraviolet ray curable resin on the reflective film 2 on the under substrate 1 by spin coating. The first gap layer 8 is effective for protecting the reflective film 2 as well as adjusting the size of the hologram generated in the recording layer 4. That is, it is effective to provide the first gap layer between the recording layer 4 and the servo pit pattern 3 because it is necessary to form an interference region of the reference beam for recording and the information beam having a certain degree of the size.

A filter layer 6 is provided on the first gap layer 8, and the optical recording medium 21 is constituted by sandwiching the recording layer 4 with the filter layer 6 and an upper substrate 5 (polycarbonate resin substrate or glass substrate).

In FIG. 6, the filter layer transmits only a red light, and does not transmit the light other than it. Therefore, since the information beam and the reference beam for recording and reproducing are a green or blue light, they do not transmit through the filter layer 6, do not reach the reflective film 2, become return lights, which exit from an entering and exiting side A

This filter layer 6 is a laminate in which three layers of cholesteric liquid crystal layers 6a, 6b and 6c have been laminated. The filter layer 6 which is the laminate of the cholesteric liquid crystal layers may be formed directly on the first gap layer 8 by applying or may be disposed by punching out the film in which the three layer laminated cholesteric liquid crystal layers have been formed on the base into the shape of the optical recording medium. By laminating the three layers of the cholesteric liquid crystal layers, a light reflectance at $\lambda_0$ to $\lambda_0$/cos20°, particularly $\lambda_0$ to $\lambda_0$/cos40° ($\lambda_0$ represents the irradiation light wavelength) is 40% or more, and no shift of the selective reflection wavelength is generated even when an incidence angle is changed.

The optical recording medium in the present embodiment may have a card shape or a disc shape. When it has a card shape, the servo pit pattern is not indispensable. In this optical recording medium, the thickness of the under substrate 1 is 0.6 mm, that of the first gap layer 8 is 100 $\mu$m, that of the filter layer 6 is 2 to 3 $\mu$m, that of the recording layer 4 is 0.6 mm and that of the upper substrate is 0.6 mm, and the total thickness is about 1.9 mm.

Subsequently, optical operations around the optical recording medium 21 will be described with reference to FIG. 8. First, the light (red light) emitted from the servo laser is reflected at almost 100% at a dichroic mirror 13 and passes through an objective lens 12. The light for the servo is irradiated to the optical recording medium 21 so as to adjust a focus on the reflective film 2 by the objective lens 12. That is, the dichroic mirror 13 transmits the light having a green or blue wavelength and reflects the light having a red wavelength at almost 100%. The servo light which entered from the entering and exiting side A of the optical recording medium 21 passes through the upper substrate 5, the recording layer 4, the filter layer 6 and the first gap layer 8, is reflected in the reflective film 2, passes again through the first gap layer 8, the filter layer 6, the recording layer 4 and the upper substrate 5, and exits from the entering and exiting side A. The return light which has exited passes through the objective lens 12, is reflected at almost 100% at the dichroic mirror 13, and servo information is detected by a servo information detector (not shown in the figure). The detected servo information is used for focus servo, tracking servo and slide servo. The hologram material which is composed of the recording layer 4 is not exposed by the red light. Thus, the servo light does not affect the recording layer 4 even if the servo light passes through the recording layer 4 or reflects diffusely in the reflective film 2. The return light of the servo light by the reflective film 2 is reflected at almost 100% at the dichroic mirror 13. Thus, the servo light is not detected by CMOS sensor or CCD14 for detecting a reproduced image, and does not become noise for the reproduction beam.

In a reflection region of $\lambda_0$ to 1.3$\lambda_0$ shown in FIG. 2, when $\lambda_0$ is 532 nm, 1.3$\lambda_0$ is 692 nm, and when the servo light has a wavelength of 655 nm, the servo light is reflected. The range of $\lambda_0$ to 1.3$\lambda_0$ shown here is the aptitude of $\pm$40° incident light in the filter layer. When such a largely inclined light is actually used, the servo can be controlled without trouble if the servo light within the incidence angle $\pm$20° is used by masking. If the average refractive index of each of the cholesteric liquid crystal layers in the filter used is sufficiently increased, it is easy to design the all within the $\pm$20° incident light in the filter for optical recording media. In that case, two cholesteric liquid crystal layers of $\lambda_0$ to 1.1$\lambda_0$ could be laminated, and thus there is no trouble to transmit the servo light.

The information beam and the reference beam for recording generated from the laser for recording/reproducing pass through a polarizing plate to become linear polarized lights, which become circularly polarized lights when they pass through a half mirror 17 and then pass through a 1/4 wavelength plate 15. The light is irradiated to the optical recording medium so that the information beam and the reference beam for recording transmit the dichroic mirror 13 and generate an interference pattern by the objective lens 11 in the recording layer 4. The information beam and the reference beam for recording enter from the entering and exiting side A and interfere with each other in the recording layer 4 to generate the interference pattern there. Subsequently, the information beam and the reference beam for recording pass through the recording layer 4, enter in the filter layer 6, but are reflected before reaching the bottom of the filter layer 6 to become the return lights. That is, the information beam and the reference beam for recording do not reach the reflective film 2. Because, three cholesteric liquid crystal layers are laminated in the filter layer 6, which has a nature to transmit only the red light. Alternatively, when the light which leaks and passes through the filter layer is

reduced to 20% or less of an incident light intensity, even if the leaked light reaches the bottom to become the return light, which is then reflected again in the filter layer. Thus, the light density contaminated in the reproduction beam is 20% x 20% =4% or less, which is not substantially problematic.

< Second embodiment >

FIG. 7 is a schematic view showing the layer configuration of the optical recording medium in a second embodiment of the present invention. In the optical recording medium 22 according to the second embodiment, the servo pit pattern 3 is formed on the substrate 1 made from the polycarbonate resin or the glass, and the reflective film 2 is provided on the surface of the servo pit pattern 3 by coating with aluminium, gold or platinum. The height of this servo pin pattern 3 is typically 1750 angstroms (175 nm) as with the first embodiment.

The difference between the second embodiment and the first embodiment is that a second gap layer is provided between the filter layer 6 and the recording layer 4 in the optical recording medium 22 according to the second embodiment.

The filter layer 6 which is a laminate of three cholesteric liquid crystal layers is formed on the first gap layer 8 after forming the first gap layer 8, and the same one as in the first embodiment can be used.

In the second gap layer 7, points focused by the information beam and the reproduction beam are present. When this area is filled with the photopolymer, the monomer is excessively consumed due to excessive exposure to thereby reduce the multiple recording capacity. Thus, it is effective to provide the inert and transparent second gap layer.

In the optical recording medium 22, the thickness of the under substrate 1 is 1.0 mm, that of the first gap layer 8 μm is 100 μm, that of the filter layer 6 is 3 μm to 5 μm, that of the second gap layer is 70 μm, that of the recording layer 4 is 0.6 mm and that of the upper substrate 5 is 0.4 mm, and the total thickness is about 2.2 mm.

When information is recorded or reproduced, the red servo light and the green information beam and reference beam for recording and reproducing are irradiated to the optical recording medium 22 having such a structure. The servo light enters from the entering and exiting side A, passes through the recording layer 4, the second gap layer 7, the filter layer 6 and the first gap layer 8, and is reflected in the reflective film 2 to be return light. This return light passes again through the first gap layer 8, the filter layer 6, the second gap layer 7, the recording layer 4 and the upper substrate 5 in this order, and exits from the entering and exiting from the entering exiting side A. The return light which has exited is used for the focus servo and the tracking servo. The hologram material which is composed of the recording layer 4 is not exposed by a red light. Thus, the servo light does not affect the recording layer 4 even if the servo light passes through the recording layer 4 or reflects diffusely in the reflective film 2. The green information beam and the like enter from the entering and exiting side A, pass through the recording layer 4 and the second gap layer 7, and are reflected in the filter layer 6 to be return lights. These return lights pass again through the second gap layer 7, the recording layer 4 and the upper substrate 5 in this order and exit from the entering and exiting side A. Also upon reproduction, of course the reference beam for reproducing and also the reproduction beam generated by irradiating the reference beam for reproducing to the recording layer 4 do not reach the reflective film 2 and exit from the entering and exiting side A. The optical operations in and around (objective lens 12, filter layer 6, CMOS sensor or CCD14 which is the detector in FIG. 8) the optical recording medium 22 is the same as in the first embodiment (FIG. 8). Thus, the description thereof is omitted.

(Method for producing optical recording medium)

The method for producing an optical recording medium of the present invention is a method for producing the optical recording medium of the present invention, includes at least a filter layer forming step, and includes a reflective film forming step, a recording layer forming step, and further if necessary other steps.

- Filter layer forming step -

The filter layer forming step is a step of forming the filter layer composed of a laminate in which two or more cholesteric liquid crystal layers are laminated on the under substrate.

As the filter layer forming step, it is preferable in terms of productivity to form the filter layer by processing the filter for the optical recording medium of the present invention into a shape of an optical recording medium and bonding the processed filter to the under substrate.

The optical recording medium shape is not particularly limited, can be appropriately selected depending on the purpose, and includes the disk shape and the card shape.

The processing is not particularly limited, can be appropriately selected depending on the purpose, and examples thereof include a cutting out processing by a press cutter, a punching out processing by a punching cutter and a burning out processing by a laser cutter.

Specifically, the filter is bonded to the substrate using an adhesive or a tackiness agent so that no bubble is included.

The adhesive is not particularly limited, can be appropriately selected depending on the purpose, and examples thereof include various adhesives of UV curable type, emulsion type, one liquid curable type and two liquid curable type. It is possible to optionally combine and use the publicly known adhesives.

The tackiness agent is not particularly limited, can be appropriately selected depending on the purpose, and includes rubber based tackiness agents, silicone based tackiness agents, urethane based tackiness agents, vinyl alkyl ether based tackiness agents, polyvinyl alcohol based tackiness agents, polyvinyl pyrrolidone based tackiness agents, polyacrylamide based tackiness agents and cellulose based tackiness agents.

The method of laminating the cholesteric liquid crystal layers is not particularly limited, can be appropriately selected from publicly known methods depending on the purpose, and examples thereof include (1) a method of laminating each of the cholesteric liquid crystal layers separately produced via the adhesive or the tackiness agent, (2) a method of laminating each of the cholesteric liquid crystal layers separately produced by pressure bonding with heat, (3) a method of laminating each of the cholesteric liquid crystal layers separately produced by interfacial compatibility, (4) a method of laminating by applying the cholesteric liquid crystal layer to form the film on the applied cholesteric liquid crystal layer, and (5) a method of laminating by further applying the cholesteric liquid crystal layer to form the film on the transparent base on the cholesteric liquid crystal layer formed as the film on the transparent base. Among them, the coating method of (5) is preferable in terms of productivity and economical efficiency.

In the lamination method of (1), the adhesive and the tackiness agent are not particularly limited, can be appropriately selected depending on the purpose, and for example, UV curable adhesives and acryl based tackiness agents are suitable. The thickness of the adhesive or the tackiness agent to be applied is not particularly limited, can be appropriately selected depending on the purpose, and is preferably 0.1 μm to 10 μm and more preferably 0.1 μm to 5 μm in case of the adhesive and is preferably 1 to 50 μm and more preferably 2 μm to 30 μm in case of the tackiness agent in terms of optical property and thinning.

In the lamination method of (2), examples of the method of pressure bonding with heat includes include a heat sealing method, an ultrasonic method, an impulse sealing method and a high frequency joining method.

In the lamination method of (3), for the method for making compatible, a method of applying a solvent which slightly dissolves or swells the cholesteric liquid crystal layer and integrating by interfacial compatibility is exemplified.

Examples of the solvent which slightly dissolves or swells the cholesteric liquid crystal layer include aromatic ones such as toluene, benzene and xylene; alcohols such as methanol and ethanol; cyclic hydrocarbon such as cyclohexane and cyclopentane; ketones such as acetone and methyl ethyl ketone (MEK); ethers such as isopropyl ether; esters such as ethyl acetate; and chlorine based solvents such as chloroform and dichloromethane. Among them, toluene, cyclohexane, cyclopentane, methyl ethyl ketone (MEK) and isopropyl alcohol are particularly preferable.

In the lamination method of (4), the coating method is not particularly limited, can be appropriately selected depending on the purpose, and examples thereof include an inkjet method, a spin coating method, a kneader coating method, a bar coating method, a die coating method, a blade coating method, a casting method, a dipping method and a curtain coating method.

The formation of the cholesteric liquid crystal layer by the above application method can be suitably performed by using (applying and drying) a solution (coating solution) in which the cholesteric liquid crystal layer materials have been dissolved in the solvent.

A condition employed when the applied film is further cured with ultraviolet ray as needed is not particularly limited, and can be appropriately selected depending on the purpose. For example, the wavelength of the ultraviolet ray to be irradiated is preferably 160 nm to 380 nm, and more preferably 250 nm to 380 nm. the exposure time period is preferably 10 seconds to 600 seconds and more preferably 10 seconds to 300 seconds when an exposure illuminance is 10 $mW/cm^2$. When the exposure illuminance is reduced to 1 $mW/cm^2$, typically the amount of the reaction initiator is increased. Thus the exposure time period is not so changed, and is preferably 10 seconds to 600 seconds and more preferably 10 seconds to 300 seconds.

In the lamination method of (5), as the material of the transparent base, any of inorganic materials and organic materials can be used. Examples of the inorganic materials include glasses, quartz and silicon. Examples of the organic materials include acetate based resins such as triacetylcellulose, polyester based resins, polyether sulfone based resins, polysulfone based resins, polycarbonate based resins, polyamide based resins, polyimide based resins, polyolefin based resins, acryl based resins, polynorbornene based resins, cellulose based resins, polyacrylate based resins, polystyrene based resins, polyvinyl alcohol based resins, polyvinyl chloride based resins, polyvinylidene chloride based resins, and polyacryl based resins. These may be used alone or combination of two or more.

(Optical recording method and optical reproducing method)

In the optical recording method of the present invention, the optical recording medium of the present invention is irradiated with an information beam and a reference beam as a coaxial light flux to , and information is recorded based on an interference pattern formed by interference between the information beam and the reference beam.

In the optical reproducing method, information is reproduced by irradiating a reference beam to the interference pattern recorded on the recording layer by the optical recording method of the present invention.

As described above, in the optical recording method and the optical reproducing method of the present invention, information is recorded by overlapping the information beam to which the two dimensional intensity distribution has been given with the reference beam having nearly the same intensity as in the information beam inside the photosensitive recording layer and utilizing the interference pattern formed by them to generate the optical property distribution. Meanwhile, when the written information is read out (reproduced), by irradiating only the reference beam to the recording layer in the same arrangement as upon recording, the reproduction beam having an intensity distribution corresponding to the optical property distribution formed inside the recording layer is emitted from the recording layer.

Here, the optical recording method and the optical reproducing method of the present invention are carried out using an optical recording reproducing apparatus of the present invention described below.

The optical recording reproducing apparatus used for the optical recording method and the optical reproducing method of the present invention will be described with reference to FIG. 9.

FIG. 9 is a block diagram showing the entire configuration of an optical recording reproducing apparatus according to one embodiment of the present invention. The optical recording reproducing apparatus includes an optical recording apparatus and an optical reproducing apparatus.

This optical recording reproducing apparatus 100 is equipped with a spindle 81 to which an optical recording medium 20 is attached, a spindle motor 82 which rotates the spindle 81 and a spindle servo circuit 83 which controls the spindle motor 82 so that the rotational frequency of the optical recording medium is kept at a given value.

The optical recording reproducing apparatus 100 is also equipped with a pickup 31 for recording information by irradiating an information beam and a reference beam for recording to the optical recording medium 20 as well as reproducing the information recorded in the optical recording medium 20 by irradiating a reproduction reference beam to the optical recording medium 20 to detect the reproduction beam, and a driving apparatus 84 which enables this pickup 31 to move in the radius direction of the optical recording medium 20.

The optical recording reproducing apparatus 100 is equipped with a detection circuit 85 for detecting a focus error signal FE, a tracking error signal TE and a reproduction signal RF by output signals from the pickup 31; a focus servo circuit 86 which performs focus servo by driving an actuator in the pickup 31 based on the focus error signal FE detected by this detection circuit 85 to move an objective lens (not shown in the figure) in the thickness direction of the optical recording medium 20; a tracking servo circuit 87 which performs tracking servo by driving the actuator in the pickup 31 based on the tracking error signal TE detected by the detection circuit 85 to move the objective lens in the radius direction of the optical recording medium 20; and a slide servo circuit 88 which performs slide servo by controlling the driving apparatus 84 based on the tracking error signal TE and a command from a controller described later to move the pickup 31 in the radius direction of the optical recording medium 20.

The optical recording reproducing apparatus 100 is further equipped with a signal processing circuit 89 which reproduces data recorded in the data area in the optical recording medium 20 by decoding output data from CMOS or CCD array to be described later in a pickup 31, reproduces a basic clock by reproduction signal RF from the detection circuit 85 and determines an address; a controller 90 which totally controls the optical recording reproducing apparatus 100; and an operation unit 91 which gives various instructions to the controller 90.

The controller 90 inputs a basic clock and address information output from a signal processing circuit 89 as well as controls the pickup 31, the spindle servo circuit 83 and the slide servo circuit 88. The spindle servo circuit 83 inputs the basic clock output from the signal processing circuit 89. The controller 90 has CPU (central processing unit), ROM (read only memory) and RAM (random access memory), and CPU and runs programs housed in ROM to realize the functions of the controller 90 utilizing the RAM as a working area.

In the optical recording reproducing apparatus used for the optical recording method and the optical reproducing method of the present invention, the optical recording medium of the present invention is used. Thus, the optical recording reproducing apparatus is capable of preventing diffused reflection from a reflective layer caused by an information beam and a reference beam in the optical recording medium and preventing occurrences of noise without causing deviation in selective reflection wavelength even when an incidence angle is changed, as well as capable of achieving high density recording which has not be conventionally achieved.

According to the present invention, it is possible to provide a filter for optical recording media that can solve various conventional problems and is capable of preventing diffused reflection from a reflective layer caused by an information beam and a reference beam in an optical recording medium and preventing occurrences of noise without causing deviation in selective reflection wavelength even when an incidence angle is changed; a holographic optical recording medium capable of performing high density recording using the filter for optical recording media; a method for producing the optical recording medium efficiently at low cost, as well as an optical recording method and an optical reproducing method using the optical recording medium.

## Examples

Examples of the present invention will be described below, however, the present invention is not limited to these Examples at all.

### (Example 1)

- Production of filter for optical recording media-

First, a base film obtained by applying polyvinyl alcohol (brand name: MP203 supplied from Kuraray Co., Ltd.) in a thickness of 1 μm on a polycarbonate film (brand name: UPILON supplied from Mitsubishi Gas Chemical Co., Inc.) having a thickness of 100 μm was prepared. A crystal orientation capability was imparted by passing the base film through a rubbing apparatus to rub the polyvinyl alcohol film side of the base film.

Subsequently, coating solutions A and B for cholesteric liquid crystal layers having the composition shown in the following Table 1 were prepared by a conventional method.

Table 1

| Component (part by mass) | Coating solution for cholesteric liquid crystal layer | |
|---|---|---|
| | A | B |
| UV polymerizable liquid crystal | 93.16 | 94.02 |
| Chiral agent | 6.84 | 5.98 |
| Photopolymerization initiator | 0.10 | 0.10 |
| Sensitizer | 0.02 | 0.02 |
| Solvent | 400 | 400 |
| *UV polymerizable liquid crystal: brand name: PALIOCOLOR LC242 supplied from BASF<br>*Chiral agent: brand name: PALIOCOLOR LC756 supplied from BASF<br>*Photopolymerization initiator: brand name: IRGACURE 369 supplied from Ciba Specialty Chemicals K.K.<br>*Sensitizer: diethyl thioxanthone<br>*Solvent: methyl ethyl ketone (MEK) | | |

Subsequently, the coating solution A for the cholesteric liquid crystal layer was applied onto the base film using a bar coater, dried and then matured for orientation at 110°C for 20 seconds. Then, a cholesteric liquid crystal layer cured film A having a thickness of 2 μm was formed by exposing with irradiation energy of 500 $mJ/cm^2$ at 110°C using an ultrahigh pressure mercury lamp.

Subsequently, the coating solution B for the cholesteric liquid crystal layer was applied onto the cholesteric liquid crystal layer A using a bar coater, dried and then matured for orientation at 110°C for 20 seconds. Then, a cholesteric liquid crystal layer cured film B having a thickness of 2 μm was formed by exposing with the irradiation energy of 500 $mJ/cm^2$ at 110°C using the ultrahigh pressure mercury lamp.

By the procedure stated above, a filter for optical recording media of Example 1 having a two-layered structure having the circularly polarized light separating property was produced, in which each of the cholesteric liquid crystal layers has a different selective reflection central wavelength from each other and the same rotation direction of the helix to each other.

### (Example 2)

- Production of filter for optical recording media -

First, coating solutions A, B and C for cholesteric liquid crystal layers having the composition shown in the following Table 1 were made by a conventional method. The coating solutions A and B for the cholesteric liquid crystal layers have the same composition as that shown in Table 1.

Subsequently, in the filter for optical recording media in Example 1, the coating solution C for the cholesteric liquid crystal layer was applied onto the cholesteric liquid crystal layer B using a bar coater, dried and then matured for

orientation at 110°C for 20 seconds. Then, a cholesteric liquid crystal layer cured film C having a thickness of 2 μm was formed by exposing with the irradiation energy of 500 mJ/cm$^2$ at 110°C using the ultrahigh pressure mercury lamp.

By the procedure stated above, a filter for optical recording media of Example 2 having a three-layered structure was produced.

Table 2

| Component (part by mass) | Coating solution for cholesteric liquid crystal layer | | |
|---|---|---|---|
| | A | B | C |
| UV polymerizable liquid crystal | 93.16 | 94.02 | 94.74 |
| Chiral agent | 6.84 | 5.98 | 5.26 |
| Photopolymerization initiator | 0.10 | 0.10 | 0.10 |
| Sensitizer | 0.02 | 0.02 | 0.02 |
| Solvent | 400 | 400 | 400 |

*UV polymerizable liquid crystal: brand name: PALIOCOLOR LC242 supplied from BASF
*Chiral agent: brand name: PALIOCOLOR LC756 supplied from BASF
*Photopolymerization initiator: brand name: IRGACURE 369 supplied from Ciba Specialty Chemicals K.K.
*Sensitizer: diethyl thioxanthone
*Solvent: methyl ethyl ketone (MEK)

(Comparative Example 1)

-Production of filter for optical recording media-

The same coating solution C for the cholesteric liquid crystal layer as in Example 2 was applied onto the same base film as used in Example 1 using a bar coater, dried and then matured for orientation at 110°C for 20 seconds. Then, a cholesteric liquid crystal layer cured film having a thickness of 3 μm was formed by exposing with the irradiation energy of 500 mJ/cm$^2$ at 110°C using the ultrahigh pressure mercury lamp. By the procedure stated above, a filter for optical recording media of Comparative Example 1 was produced.

For the thus obtained respective filters for optical recording media, a light reflection property was measured using a spectrum reflection measurement apparatus (L-5662 supplied from Hamamatsu Photonics K.K. as a light source and PMA-11 supplied from Hamamatsu Photonics K.K. as a photo multichannel analyzer).

As a result, it was observed that the filter for optical recording media of Example 1 could reflect 40 % or more of the light having a wavelength of 532 nm which was the selective wavelength for the light within ±20° of the incidence angle as shown in FIGs. 4 and 5. It was also observed that the filter for optical recording media of Example 2 could reflect 40% or more of the light having a wavelength of 532 nm which was the selective wavelength for the light within ±40° of the incidence angle as shown in FIGS. 2 and 3.

In contrast, after just inclining the incidence angle a little bit, the filter for optical recording media of Comparative Example 1 could scarcely reflect the light having a wavelength of 532 nm.

(Example 3)

- Production of optical recording medium-

A commonly used substrate made from a polycarbonate resin having a diameter of 120 mm and a plate thickness of 0.6 mm used for DVD+RW was used as an under substrate. On the entire surface of this substrate, a servo pit pattern was formed, and the servo pit pattern had a track pitch of 0.74 μm, a groove depth of 175 nm and a groove width of 300 nm.

First, a reflective film was formed on the servo pit pattern surface formed on the under substrate. Aluminium (Al)was used for the material of the reflective film. The A1 reflective film having a thickness of 200 nm was formed by DC magnetron sputtering method.

Subsequently, the filter for optical recording media produced in Example 1 was punched out into a given disc size so as to be disposed on the substrate, and the disc size filter was bonded to the optical recording medium such that a base film surface thereof made contact with the serve pit pattern of the optical recording medium. The disc size

filter was bonded to the optical recording medium using an ultraviolet ray curable resin and a tackiness agent so that no bubble was included therein. By the procedure stated above, a filter layer was formed.

Subsequently, as a recording layer material, a photopolymer coating solution having the following composition was prepared.

< Composition of photopolymer coating solution >

| | |
|---|---|
| Di(urethane acrylate) oligomer (ALU-351 supplied from Echo Resins) | 59 parts by mass |
| Isobornyl acrylate | 30 parts by mass |
| Vinyl benzoate | 10 parts by mass |
| Polymerization initiator (IRGACURE 784 supplied from Ciba Specialty Chemicals) | 1 part by mass |

The obtained photopolymer coating solution was placed on the filter layer using a dispenser. An end of the disc was bonded to an upper substrate having a diameter of 12 mm and a thickness of 0.6 mm made from a polycarbonate resin with an adhesive while pressing the upper substrate on the photopolymer. The disc end was provided with a flange section so that the thickness of the photopolymer layer was 500 μm. The thickness of the photopolymer layer can be determined by bonding the upper substrate to the disc end, and the excessively applied photopolymer overflowed and was removed. By the procedure stated above, an optical recording medium of Example 3 was produced. FIG. 6 is a schematic sectional view showing an embodiment of a layer configuration similar to that produced in Example 3.

(Example 4)

- Production of optical recording medium -

An optical recording medium of Example 4 was produced in the same manner as in Example 3, except that the filter for optical recording media of Example 2 was used in place of the filter for optical recording media of Example 1. FIG. 6 is the schematic sectional view showing an embodiment of a layer configuration of Example 4.

(Example 5)

An optical recording medium of Example 5 was produced in the same manner as in Example 3, except that a second gap layer was provided between the reflective film and the filter layer in Example 3. As the second gap layer, a polycarbonate film having a thickness of 100 μm was used, and adhered with an ultraviolet ray curable resin. FIG. 7 is a schematic sectional view showing an embodiment of a layer configuration similar to that produced in Example 5.

(Comparative Example 2)

- Production of optical recording medium-

An optical recording medium of Comparative Example 2 was produced in the same manner as in Example 3, except that the filter for optical recording media of Comparative Example 1 was used in place of the filter for optical recording media of Example 1.

<Performance evaluation>

For the obtained respective optical recording media in Examples 3 to 5 and Comparative Example 2, the number of multiple recordable times was measured by setting each of the optical recording media in an optical recording reproducing apparatus as shown in FIG. 9 and actually recording information thereon. Results are shown in Table 3.

Table 3

| | Number of Multiple Recordable Times |
|---|---|
| Example 3 | 5 to 10 |
| Example 4 | 5 to 10 |
| Example 5 | 50 to 250 |

(continued)

| | Number of Multiple Recordable Times |
|---|---|
| Comparative Example 2 | 0 to 1 |

From the results shown in Table 3, it was observed that multiple high density recording which is a final goal of a holographic optical recording medium is enabled by laminating cholesteric liquid crystal layers and by adjusting the intensity of the information beam and the reproduction beam, although some deviations occur.

Industrial Applicability

The filter for optical recording media of the present invention can prevent occurrences of noise without causing deviation in selective reflection wavelength even when an incidence angle is changed, and can be suitably used as a wavelength selective reflection film in various holographic optical recording media capable of recording high density images, which have not yet been conventionally achieved.

The optical recording medium of the present invention can prevent occurrences of noise without causing deviation in selective reflection wavelength even when an incidence angle is changed, and can be suitably used as a holographic optical recording medium capable of recording high density images, which has not yet been conventionally achieved.

## Claims

**1.** A filter for optical recording media, comprising:

two or more cholesteric liquid crystal layers laminated to one another.

**2.** The filter for optical recording media according to claim 1, wherein each of the two or more cholesteric liquid crystal layers has circularly polarized light separating property.

**3.** The filter for optical recording media according to any one of claims 1 to 2,
wherein the rotation direction of a helix in each of the two or more cholesteric liquid crystal layers is the same to each other.

**4.** The filter for optical recording media according to any one of claims 1 to 3,
wherein each of the two or more cholesteric liquid crystal layers has a different selective reflection central wavelength from each other.

**5.** The filter for optical recording media according to any one of claims 1 to 4,
wherein each of the two or more cholesteric liquid crystal layers has a selective reflection wavelength zone, and the selective reflection wavelength zone is continuous.

**6.** The filter for optical recording media according to any one of claims 1 to 5,
wherein a light having a first wavelength is transmitted and a light having a second wavelength which is different from the light having the first wavelength is reflected.

**7.** The filter for optical recording media according to claim 6, wherein the light of the first wavelength has a wavelength of 350 nm to 600 nm and the light of the second wavelength has a wavelength of 600 nm to 900 nm.

**8.** The filter for optical recording media according to any one of claims 1 to 7,
wherein a light reflectance at $\lambda_0$ to $\lambda_0$/ cos20° is 40% or more, where $\lambda_0$ represents an irradiation light wavelength.

**9.** The filter for optical recording media according to any one of claims 1 to 8,
wherein a light reflectance at $\lambda_0$ to $\lambda_0$/cos40° is 40% or more, where $\lambda_0$ represents an irradiation light wavelength.

**10.** The filter for optical recording media according to any one of claims 1 to 9 used as a selective reflection film in an optical recording medium which records information by utilizing holography.

**11.** The filter for optical recording media according to claim 10, wherein the optical recording medium records information by irradiating the optical recording medium with an information beam and a reference beam as a coaxial light flux based on an interference pattern formed by interference between the information beam and the reference beam.

**12.** An optical recording medium, comprising:

an upper side substrate,
an under substrate,
a recording layer which records information by utilizing holography on the under substrate, and
a filter layer between the under substrate and the recording layer,
wherein the filter layer is a laminate in which two or more cholesteric liquid crystal layers are laminated.

**13.** The optical recording medium according to claim 12, wherein each of the two or more cholesteric liquid crystal layers has circularly polarized light separating property.

**14.** The optical recording medium according to any one of claims 12 to 13,
wherein the rotation direction of a helix in each of the two or more cholesteric liquid crystal layers is the same to each other.

**15.** The optical recording medium according to any one of claims 12 to 14,
wherein each of the two or more cholesteric liquid crystal layers has a different selective reflection central wavelength from each other.

**16.** The optical recording medium according to any one of claims 12 to 15,
wherein each of the two or more cholesteric liquid crystal layers has a selective reflection wavelength zone, and the selective reflection wavelength zone is continuous.

**17.** The optical recording medium according to any one of claims 12 to 16,
wherein a light having a first wavelength is transmitted to the filter layer, and a light having a second wavelength which is different from the light having the first wavelength is reflected by the filter layer.

**18.** The optical recording medium according to claim 17, wherein the light of the first wavelength has a wavelength of 350 nm to 600 nm, and the light of the second wavelength has a wavelength of 600 nm to 900 nm.

**19.** The optical recording medium according to any one of claims 12 to 18,
wherein the light reflectance at $\lambda_0$ to $\lambda_0/\cos20°$ is 40% or more, where $\lambda_0$ represents an irradiation light wavelength.

**20.** The optical recording medium according to any one of claims 12 to 19,
wherein a light reflectance at $\lambda_0$ to $\lambda_0/\cos40°$ is 40% or more, where $\lambda_0$ represents an irradiation light wavelength.

**21.** The optical recording medium according to any one of claims 12 to 20,
wherein the substrate has a servo pit pattern.

**22.** The optical recording medium according to claim 21, wherein the servo pit pattern has a reflective film on a surface thereof.

**23.** The optical recording medium according to claim 22, wherein the reflective film is a metallic reflective film.

**24.** The optical recording medium according to any one of claims 22 to 23 further comprising a first gap layer for smoothening the under substrate surface between the filter layer and the reflective film.

**25.** The optical recording medium according to any one of claims 12 to 24 further comprising a second gap layer between the recording layer and the filter layer.

**26.** A method for producing an optical recording medium, comprising:

forming a filter layer which comprises a laminate in which two or more cholesteric liquid crystal layers are laminated on an under substrate to thereby produce an optical recording medium,

wherein the optical recording medium is an optical recording medium according to any one of claims 12 to 25.

**27.** An optical recording method, comprising:

irradiating an optical recording medium according to any one of claims 12 to 25 with an information beam and a reference beam as a coaxial light flux , and recording information on a recording layer based on an interference pattern formed by interference between the information beam and the reference beam.

**28.** An optical reproducing method, comprising:

reproducing information by irradiating with a reference beam an interference pattern recorded on a recording layer by an optical recording method according to claim 27.

FIG. 1

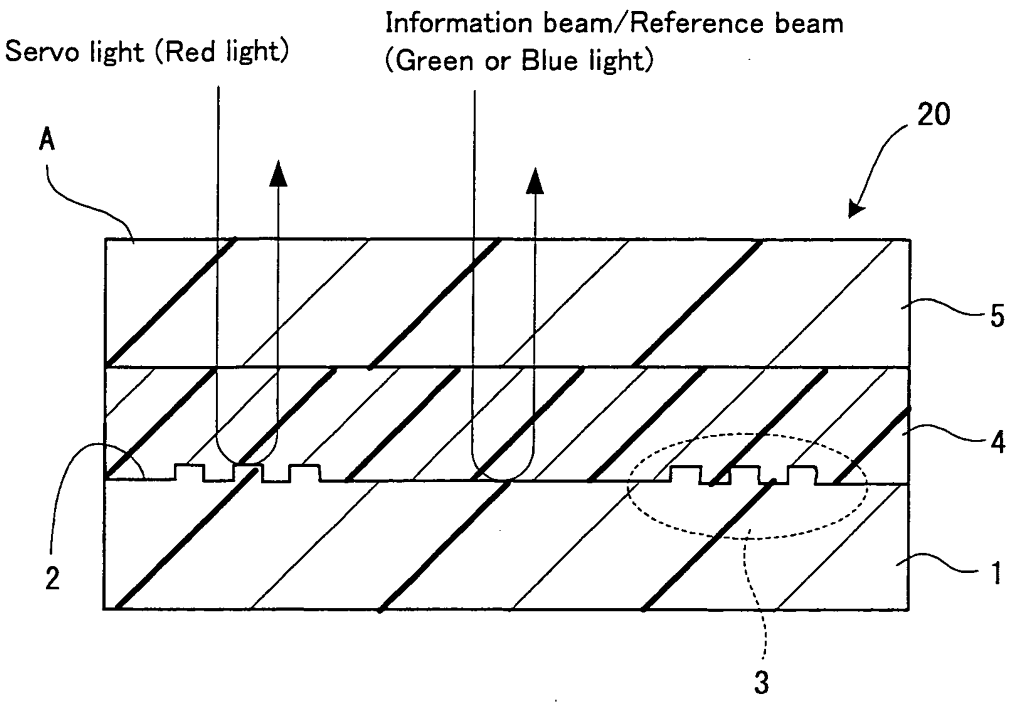
Servo light (Red light)
Information beam/Reference beam
(Green or Blue light)
20
A
5
4
2
1
3

FIG. 2

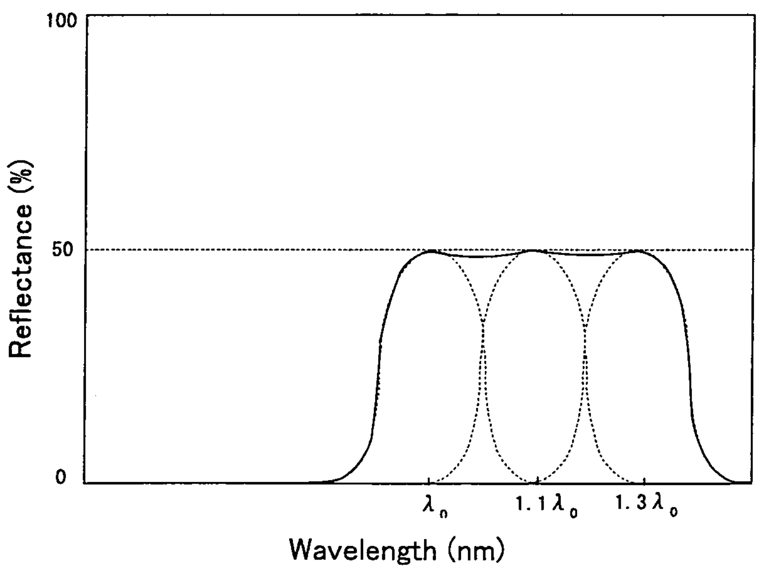
100
50
0
Reflectance (%)
λ0
1.1λ0
1.3λ0
Wavelength (nm)

FIG. 3

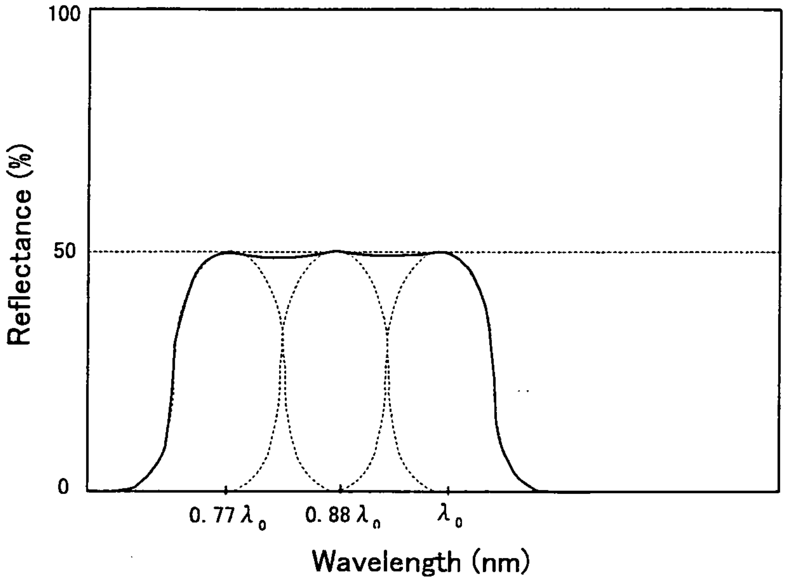
100
50
0
Reflectance (%)
0. 77 λ0
0. 88 λ0
λ0
Wavelength (nm)

FIG. 4

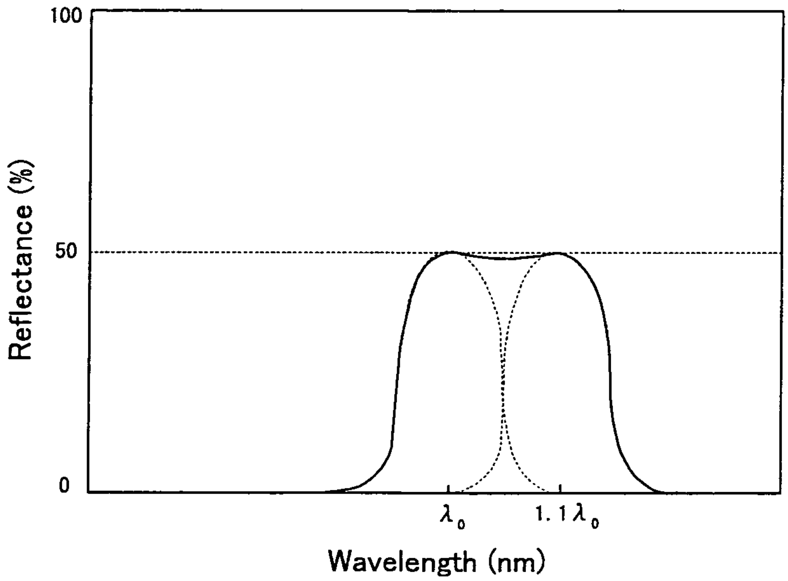
100
50
0
Reflectance (%)
λ0
1. 1 λ0
Wavelength (nm)

FIG. 5

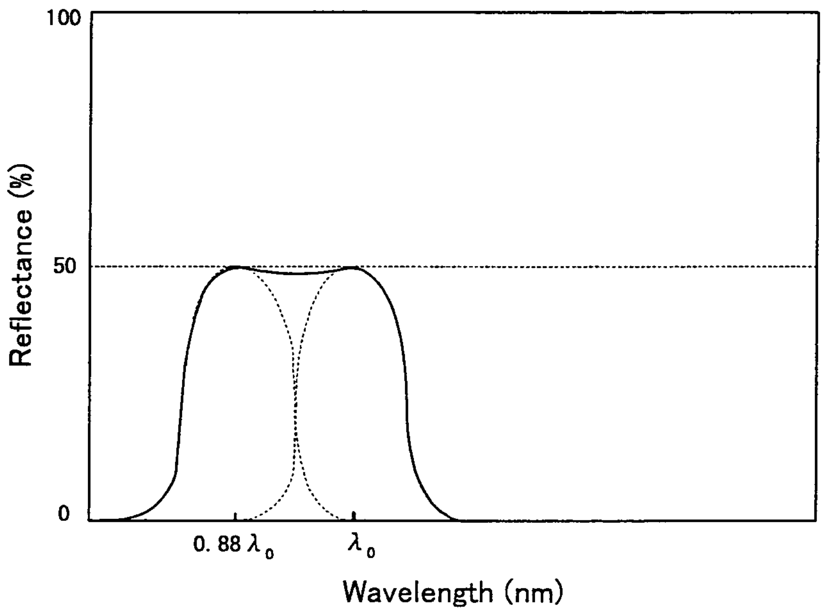

FIG. 6

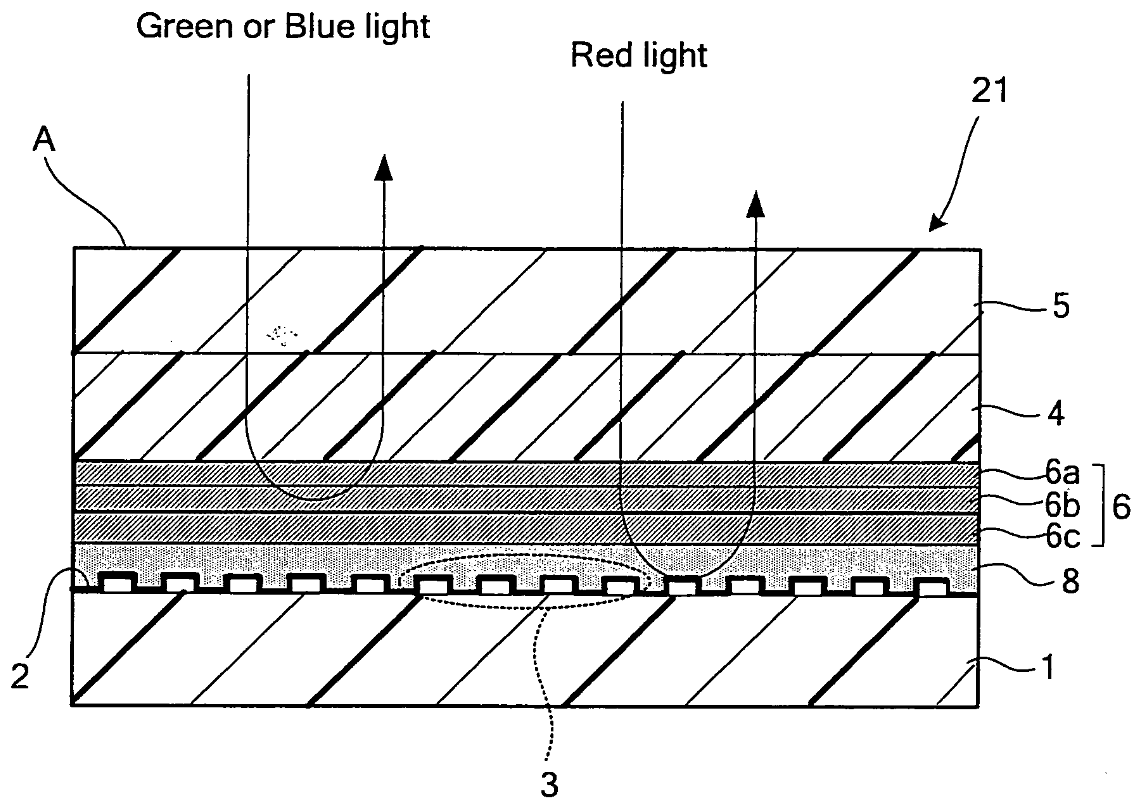

FIG. 7

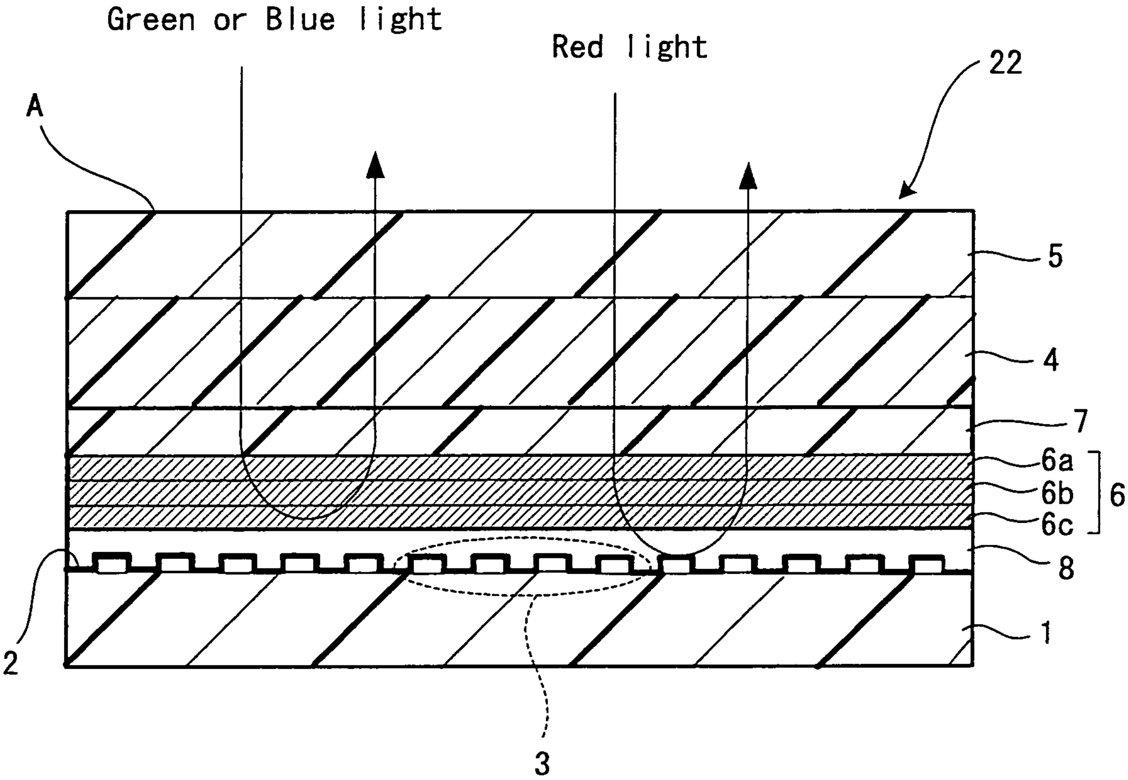

FIG. 8

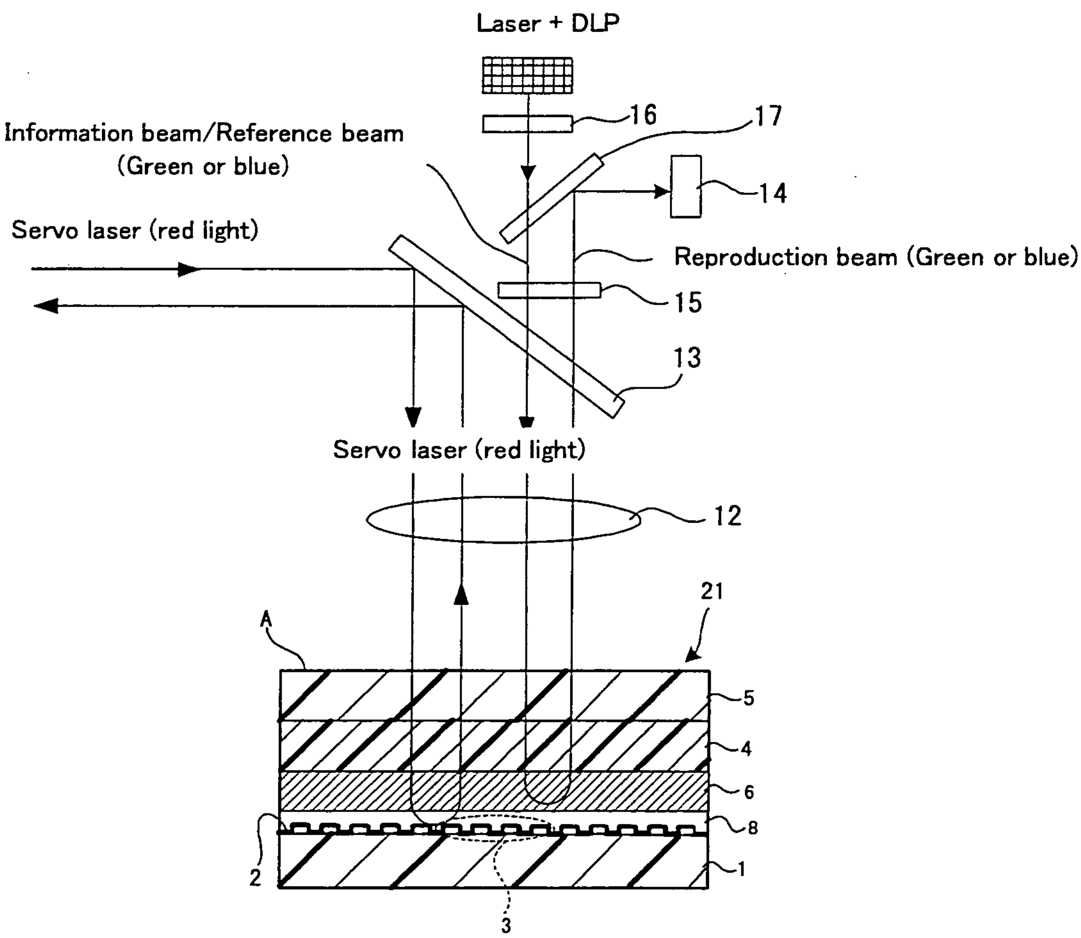
Laser + DLP
16
17
Information beam/Reference beam
(Green or blue)
14
Servo laser (red light)
Reproduction beam (Green or blue)
15
13
Servo laser (red light)
12
21
A
5
4
6
8
2
1
3

FIG. 9

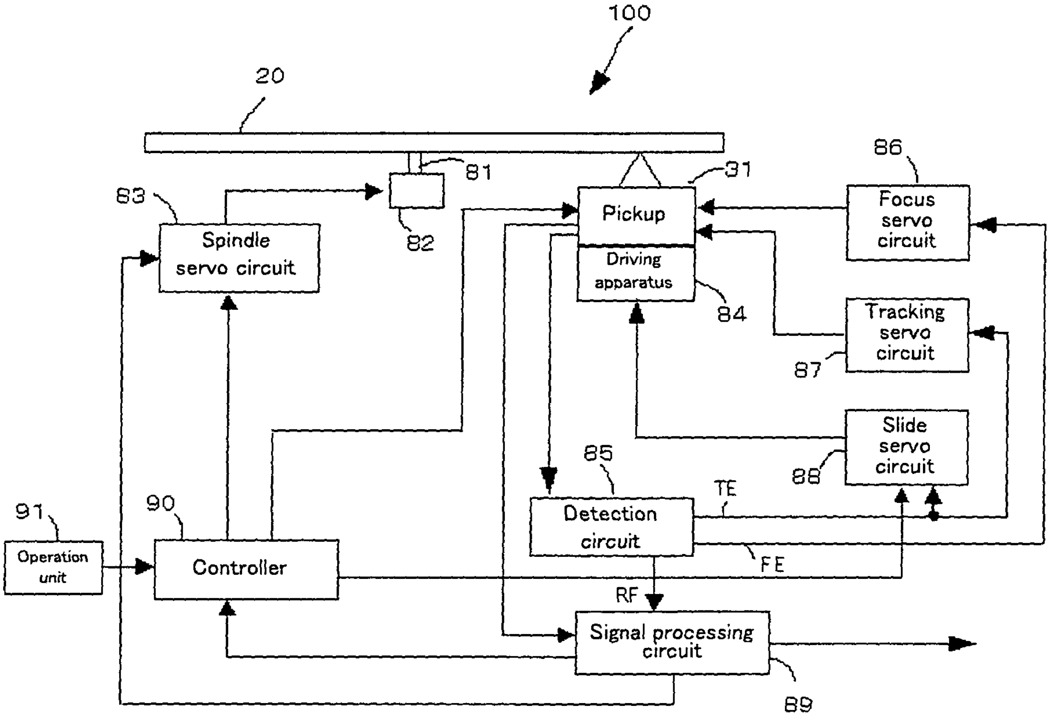
100
20
81
31
86
83
Focus
servo
circuit
Pickup
Spindle
servo circuit
82
Driving
apparatus
84
Tracking
servo
circuit
87
Slide
servo
circuit
85
88
TE
91
90
Detection
circuit
Operation
unit
Controller
FE
RF
Signal processing
circuit
89

## INTERNATIONAL SEARCH REPORT

International application No.
PCT/JP2005/021482

A. CLASSIFICATION OF SUBJECT MATTER
*G02B5/30*(2006.01), *G03H1/02*(2006.01), *G11B7/24*(2006.01), *G11B7/258*(2006.01)

According to International Patent Classification (IPC) or to both national classification and IPC

B. FIELDS SEARCHED

Minimum documentation searched (classification system followed by classification symbols)
G02B5/30, G03H1/02, G11B7/24, G11B7/258

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-265472 A (Optware Corp.), 24 September, 2004 (24.09.04), Full text; all drawings; particularly, Claims 1 to 11<br>& WO 2004/070714 A1 & EP 1596376 A1 | 1-28 |
| Y | JP 11-44816 A (Nitto Denko Corp.), 16 February, 1999 (16.02.99), Full text; all drawings; particularly, Claims 1 to 14<br>& EP 881510 A2 & EP 881510 B1<br>& US 6016177 A & DE 69829332 E<br>& KR 98087393 A & TW 494258 A | 1-28 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 February, 2006 (27.02.06) | Date of mailing of the international search report<br>07 March, 2006 (07.03.06) |
| Name and mailing address of the ISA/<br>Japanese Patent Office<br>Facsimile No. | Authorized officer<br><br>Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002123949 A
- JP 11311936 A
- JP 2004265472 A
- US 5759721 A
- US 4942112 A
- US 4959284 A
- US 6221536 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 200275859 A

### Non-patent literature cited in the description

- Photopolymer Handbook. Kogyo Chosakai Publishing Co., Ltd, 1989
- Photopolymer Technology. Nikkan Kogyo Shinbun, 1989
- *SPIE Proceedings,* 1997, vol. 3010, 354-372
- *SPIE Proceedings,* 1998, vol. 3291, 89-103